# EUROPEAN PATENT APPLICATION

(11) **EP 4 682 811 A1**
(43) Date of publication of application: **21.01.2026**
(21) Application number: 24770437.2
(22) Date of filing: 20.02.2024
(51) Int. Cl.: G06Q 50/10, G06F 3/01

(54) **INFORMATION PROCESSING DEVICE, INFORMATION PROCESSING SYSTEM, AND INFORMATION PROCESSING METHOD**

(30) Priority: 14.03.2023 JP 2023039317
(71) Applicant: Sony Group Corporation, Tokyo 108-0075 (JP)
(72) Inventor: TAKASHIMA, Kouichiro, Tokyo 108-0075 (JP); HOSHINO, Hironari, Tokyo 108-0075 (JP); KATO, Koichi, Tokyo 108-0075 (JP); HASEGAWA, Masaaki, Tokyo 108-0075 (JP); KASHIWAGI, Yasutaka, Tokyo 108-0075 (JP)
(74) Representative: D Young & Co LLP
(86) International application number: PCT/JP2024/006064
(87) International publication number: WO 2024/190324

(57) **Abstract**

Provided are an apparatus and a method for determining and executing an action such as optimal advice for each user in comprehensive consideration of behavior data of users of each of a plurality of user terminals. There are provided a user behavior data acquisition unit that acquires behavior data of a user who uses a user terminal such as a smartphone, an execution action determination unit that determines an action to be executed for the user, and an action execution unit that executes the action determined by the execution action determination unit. The execution action determination unit determines and executes an optimal action to be executed on the basis of the user behavior data of the user acquired by the user behavior data acquisition unit and the behavior data of the external terminal-using user acquired from the external terminal.

## Description

### TECHNICAL FIELD

The present disclosure relates to an information processing apparatus, an information processing system, and an information processing method. More specifically, the present technology relates to an information processing apparatus, an information processing system, and an information processing method that perform various proposals, reports, and the like from a user terminal such as a smartphone to a user who is a terminal user.

### BACKGROUND ART

Recently, with the evolution of Artificaial intelligence (AI) technology, a system that interacts with a user and a system that proposes advice or the like to the user on the basis of action of the user, accumulated data of an enormous knowledge database accessible via a network, or the like are used.

Various equipment such as a smart speaker, agent equipment, and a smartphone have an AI function. For example, in a case where the user utters "tell me the tomorrow's weather" to the smartphone, the smartphone acquires weather information from the weather information providing server, and generates and outputs a system response based on the acquisition information. Specifically, for example,
system response = "It's sunny tomorrow. However, there may be a thunderstorm in the evening."

Such a system response is output.

By using the AI function of various information processing apparatuses such as smartphones, it is possible to execute not only a weather forecast but also various processes such as a process of providing acquisition information from an external apparatus such as various servers accessible via a network, an operation of equipment connected to the network, an equipment operation such as music reproduction, and a product order of detergent, food, and the like.

Furthermore, there is also an apparatus that observes the user's action using a camera, a microphone, other sensors, or the like attached to equipment such as a smartphone, and outputs a proposal or advice according to the user's behavior.

Note that, as a conventional technique that discloses a system that gives advice to a user, for example, there is Patent Document 1 (Japanese Patent Application Laid-Open No. 2021-192131).

This document discloses a configuration in which, for example, in a case where a user talks about a schedule of dining out at a certain restaurant, the system gives a warning that the weight of the user increases, and recommends another restaurant.

However, the technology disclosed so far including the configuration described in this patent document has a configuration in which advice is given on the basis of an action of a smartphone user that can be acquired by a certain apparatus, for example, one smartphone.

For example, there is no disclosure of a configuration in which one smartphone acquires not only the action of the user of the smartphone but also behavior information of other users from other equipment, and gives optimal advice in consideration of the action of other users.

### CITATION LIST

### PATENT DOCUMENT

Patent Document 1: Japanese Patent Application Laid-Open No. 2021-192131

### SUMMARY OF THE INVENTION

### PROBLEMS TO BE SOLVED BY THE INVENTION

The present disclosure has been made in view of the above problems, for example, and an object of the present disclosure is to provide an information processing apparatus, an information processing system, and an information processing method that acquire not only behavior of a user of an information processing apparatus such as a smartphone but also information of other users from the outside, comprehensively examine these pieces of information, and execute an action such as an optimal proposal.

Furthermore, a configuration of an example of the present disclosure provides an information processing apparatus, an information processing system, and an information processing method that execute various actions in an action mode (taste) in consideration of a user character to be advised, in consideration of the user character.

### SOLUTIONS TO PROBLEMS

A first aspect of the present disclosure is an information processing apparatus including:
a user behavior data acquisition unit that acquires behavior data of a user who uses the information processing apparatus;
an execution action determination unit that determines an action to be executed for the user; and
an action execution unit that executes an action determined by the execution action determination unit,
in which the execution action determination unit
determines an execution action on the basis of user behavior data of the user acquired by the user behavior data acquisition unit and the behavior data of an external terminal-using user acquired from an external terminal.

Further, a second aspect of the present disclosure is an information processing system including a plurality of communication terminals that performs communication via a network,
each of the plurality of communication terminals being configured to:
analyze behavior data of a plurality of users using the plurality of communication terminals; and
determine and execute an action to be executed for each user who uses the plurality of communication terminals.

Further, a third aspect of the present disclosure is an information processing method executed in an information processing apparatus, the information processing method including:
a user behavior data acquisition step of acquiring, by a user behavior data acquisition unit, behavior data of a user who uses the information processing apparatus;
an execution action determination step of determining, by an execution action determination unit, an action to be executed for the user; and
an action execution step in which an action execution unit executes an action determined by the execution action determination unit,
in which the execution action determination step
determines an executed action on the basis of user behavior data of the user acquired by the user behavior data acquisition unit and behavior data of an external terminal-using user acquired from an external terminal.

Still other objects, features, and advantages of the present disclosure will become apparent from more detailed description based on examples of the present disclosure described later and the accompanying drawings. Note that, in the present specification, a system is a logical set configuration of a plurality of apparatuses, and is not limited to a system in which apparatuses of respective configurations are in the same housing.

According to a configuration of an example of the present disclosure, an apparatus and a method for determining and executing an action such as optimal advice for each user in comprehensive consideration of behavior data of a user of each of a plurality of user terminals are realized.

Specifically, for example, a user behavior data acquisition unit that acquires behavior data of a user who uses a user terminal such as a smartphone, an execution action determination unit that determines an action to be executed for the user, and an action execution unit that executes the action determined by the execution action determination unit are included. The execution action determination unit determines and executes an optimal action to be executed on the basis of the user behavior data of the user acquired by the user behavior data acquisition unit and the behavior data of the external terminal-using user acquired from the external terminal.

According to the present configuration, an apparatus and a method for determining and executing an action such as optimal advice for each user in comprehensive consideration of behavior data of users of each of a plurality of user terminals are realized.

Note that the effects described in the present specification are merely examples and are not limited, and additional effects may be provided.

### BRIEF DESCRIPTION OF DRAWINGS

Fig. 1 is a diagram for explaining an overview of processing executed by an information processing apparatus of the present disclosure.
Fig. 2 is a diagram for explaining an overview of processing executed by the information processing apparatus of the present disclosure.
Fig. 3 is a diagram for explaining an overview of processing executed by the information processing apparatus of the present disclosure.
Fig. 4 is a diagram for explaining an overview of processing executed by the information processing apparatus of the present disclosure.
Fig. 5 is a diagram for explaining an overview of processing executed by the information processing apparatus of the present disclosure.
Fig. 6 is a diagram for explaining a configuration example of an information processing system of the present disclosure.
Fig. 7 is a diagram for explaining a configuration example of a user terminal corresponding to an information processing apparatus of the present disclosure.
Fig. 8 is a diagram for explaining an example of data stored in a user/machine character matching database.
Fig. 9 is a diagram for explaining an example of data stored in a user/machine character matching database.
Fig. 10 is a diagram for explaining a determination processing example of an execution mode (taste) of an action executed by an action execution mode (taste) determination unit.
Fig. 11 is a diagram illustrating a flowchart for explaining a sequence of processing executed by the information processing apparatus of the present disclosure.
Fig. 12 is a diagram for explaining a processing example of performing machine role determination processing and execution action determination processing using data stored in both terminals or the like by communication processing between a plurality of terminals.
Fig. 13 is a diagram illustrating a flowchart for explaining a processing example of performing machine role determination processing and execution action determination processing using data stored in both terminals or the like by communication processing between a plurality of terminals.
Fig. 14 is a diagram for explaining a UI for setting recording processing of user behavior data and providing processing of the user behavior data to another user terminal.
Fig. 15 is a diagram for explaining a UI for setting recording processing of user behavior data and providing processing of the user behavior data to another user terminal.
Fig. 16 is a sequence diagram illustrating a sequence example of providing processing and recording processing of user behavior data to another user terminal.
Fig. 17 is a diagram for explaining a specific example of "behavior data transmission/reception terminal management data" generated or updated by the management server.
Fig. 18 is a diagram for explaining an example of a specific processing sequence in a case where an execution action is determined between a plurality of user terminals that mutually transmits and receives behavior data.
Fig. 19 is a diagram for explaining an example of a specific processing sequence in a case where an execution action is determined between a plurality of user terminals that mutually transmits and receives behavior data.
Fig. 20 is a diagram for explaining an example of a specific processing sequence in a case where an execution action is determined between a plurality of user terminals that mutually transmits and receives behavior data.
Fig. 21 is a diagram for explaining an example of a specific processing sequence in a case where an execution action is determined between a plurality of user terminals that mutually transmits and receives behavior data.
Fig. 22 is a diagram for explaining an example of a specific processing sequence in a case where an execution action is determined between a plurality of user terminals that mutually transmits and receives behavior data.
Fig. 23 is a diagram for explaining an example of a specific processing sequence in a case where an execution action is determined between a plurality of user terminals that mutually transmits and receives behavior data.
Fig. 24 is a diagram for explaining an example of a specific processing sequence in a case where an execution action is determined between a plurality of user terminals that mutually transmits and receives behavior data.
Fig. 25 is a diagram for explaining an example of a specific processing sequence in a case where an execution action is determined between a plurality of user terminals that mutually transmits and receives behavior data.
Fig. 26 is a diagram for explaining an example of a specific processing sequence in a case where an execution action is determined between a plurality of user terminals that mutually transmits and receives behavior data.
Fig. 27 is a diagram for explaining an example of a specific processing sequence in a case where an execution action is determined between a plurality of user terminals that mutually transmits and receives behavior data.
Fig. 28 is a diagram for explaining a hardware configuration example of a user terminal or a server which is an information processing apparatus of the present disclosure.

### MODE FOR CARRYING OUT THE INVENTION

Hereinafter, details of an information processing apparatus, an information processing system, and an information processing method of the present disclosure will be described with reference to the drawings. Note that the description will be made according to the following items.
1. Overview of Processing Executed by Information Processing Apparatus of Present Disclosure
2. Specific Configuration Examples of Information Processing System and Information Processing Apparatus of Present Disclosure
3. Sequence of Processing Executed by Information Processing Apparatus of Present Disclosure
4. UI for Setting Recording Processing of User Behavior Data and Providing Processing to Other User Terminal
5. Specific Example of Processing Using Information Processing Apparatus of Present Disclosure
6. Hardware Configuration Example of User Terminal and Server
7. Summary of Configuration of Present Disclosure

### [1. Overview of Processing Executed by Information Processing Apparatus of Present Disclosure]

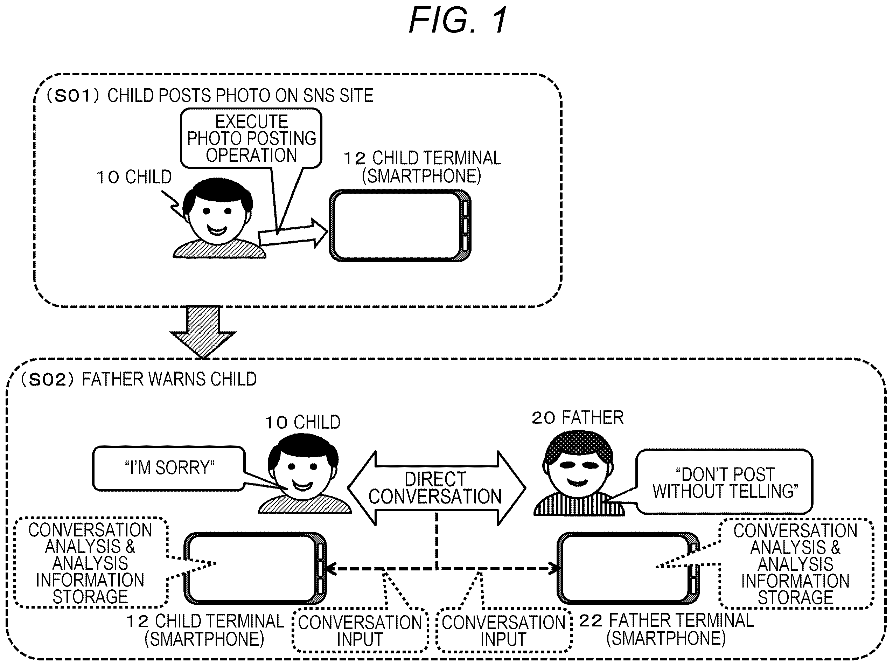

First, an overview of processing executed by the information processing apparatus of the present disclosure will be described with reference to Fig. 1 and subsequent drawings.

Figs. 1 to 3 are diagrams for explaining a sequence of an example of processing executed by the information processing apparatus of the present disclosure.

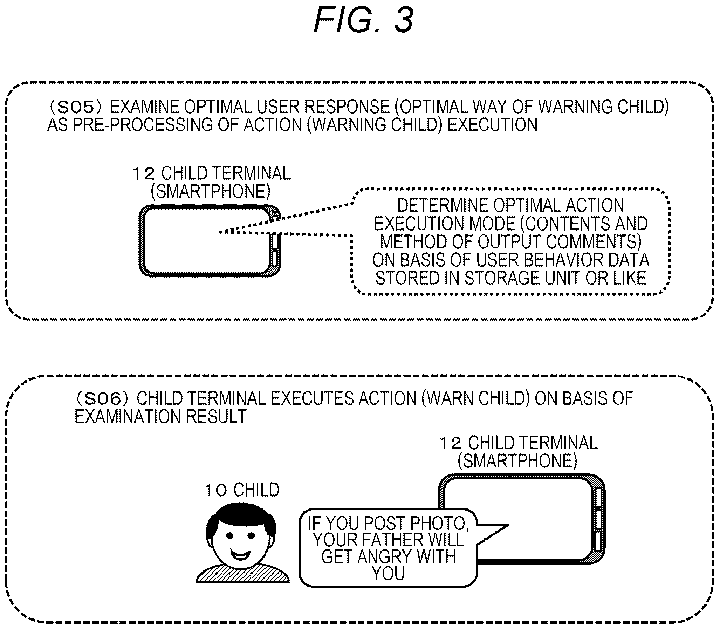

Each process from step S01 illustrated in Fig. 1 to step S06 illustrated in Fig. 3 is sequentially executed.

Note that, in the following, an example in which a smartphone is used as an example of the information processing apparatus of the present disclosure will be described. However, the information processing apparatus of the present disclosure is not limited to a smartphone, and includes various apparatuses such as a PC, a tablet terminal, a smart speaker, and agent equipment.

An information processing apparatus such as a smartphone according to the present disclosure acquires not only a behavior of a user of the information processing apparatus but also information of other users from other equipment, comprehensively examines the information, and executes an action such as an optimal proposal.

Note that these processes are executed under the control of an application (program) stored in the information processing apparatus.

Hereinafter, each process from step S01 illustrated in Fig. 1 to step S06 illustrated in Fig. 3 will be sequentially described.

### (Step S01)

First, as illustrated in step S01 of Fig. 1, a child 10 uses a child terminal (smartphone) 12 which is his/her smartphone to post a photo on the SNS site.

### (Step S02)

Next, in step S02, a father 20 of the child 10 warns the child 10 for having posted a photo on the SNS site.

In consideration of the safety of the child 10, the father 20 wants to stop the child 10 from posting photos on the SNS site, and warns the child 10 verbally and directly.

The child terminal (smartphone) 12 and the father terminal (smartphone) 22 possessed by the father 20 observe a situation in which the father 20 warns the child 10.

That is, the conversation in which the father 20 warns the child 10 is input by the microphone of the terminal (smartphone) and stored in the storage unit of each terminal. The data recorded in the storage unit of each terminal may not be the conversation itself, and may be, for example, data indicating that the father has warned the child. In addition, an image or sensor detection information using a camera or other sensors, for example, a position sensor such as a GPS may be recorded.

### (Step S03)

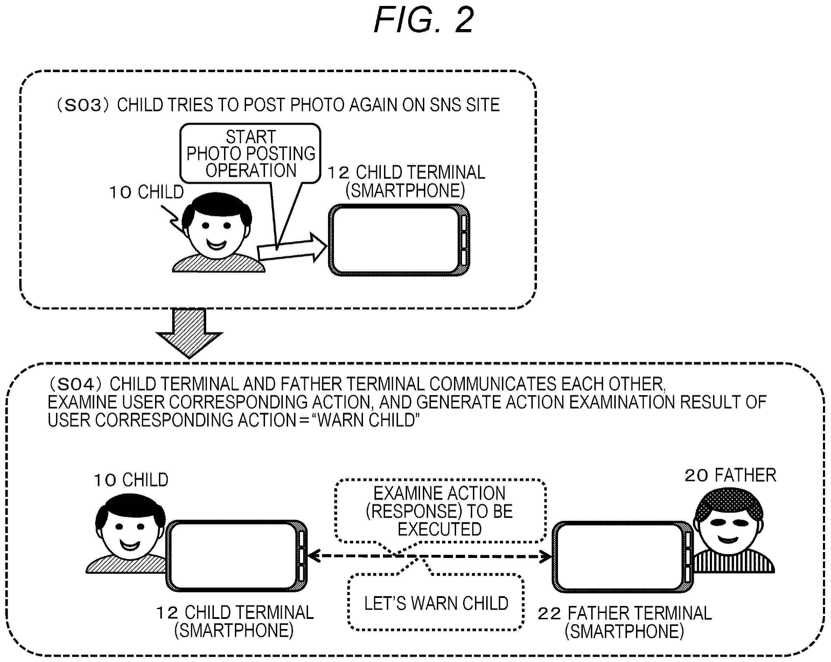

Next, in spite of the warning of the father 20, the child 10 tries to post a photo on the SNS site as illustrated in step S03 of Fig. 2 and using the child terminal (smartphone) 12 which is his smartphone.

### (Step S04)

In a state where the child 10 is about to post a photo in step S03, the child terminal 12 and the father terminal 22 execute mutual communication, analyze behavior data of each user stored in each terminal, and examine an action (response) to be executed.

This processing can be executed using, for example, an AI function such as a learning model generated in advance. Specifically, the optimal action (response) is examined on the basis of the behavior information of each user stored in each terminal, the accumulated data of the knowledge database accessible via the network, and the like.

Note that the AI function such as the learning model may be configured in each terminal, or the AI function of an external apparatus accessible by each terminal may be used.

Note that communication between the child terminal 12 and the father terminal 22 may be either direct communication or communication via a communication management server.

As illustrated in step S04 of Fig. 2, as a result of the examination processing executed between the child terminal 12 and the father terminal 22, that is, the examination processing of the action (response) to be executed, it is concluded that the optimal action is "warn the child".

### (Step S05)

Next, in step S05, the child terminal 12 examines an optimal action execution mode as pre-processing of executing an action (warn the child). That is, the optimal way of warning the child is examined.

Specifically, the character of the child is analyzed on the basis of past user behavior data or the like stored in the storage unit of the child terminal 12, and an optimal action execution mode (content or method of the output comment) corresponding to the analyzed character is determined.

For example, an optimal warning method is determined according to the user's character, such as "teach gently" or "command tightly".

### (Step S06)

Finally, in step S06, the child terminal 12 executes an action for the child 10.

That is, the action examination result = "warn the child" generated in step S04 is executed according to the optimal action execution mode examined in step S05.

As illustrated in Fig. 3 (S06), the child terminal 12 outputs, via a speaker of the child terminal 12, a speech to the child 10 saying,
"If you post a photo, your father will get angry with you."

With such processing, it is possible to discourage the child 10 from posting a photo on the SNS site.

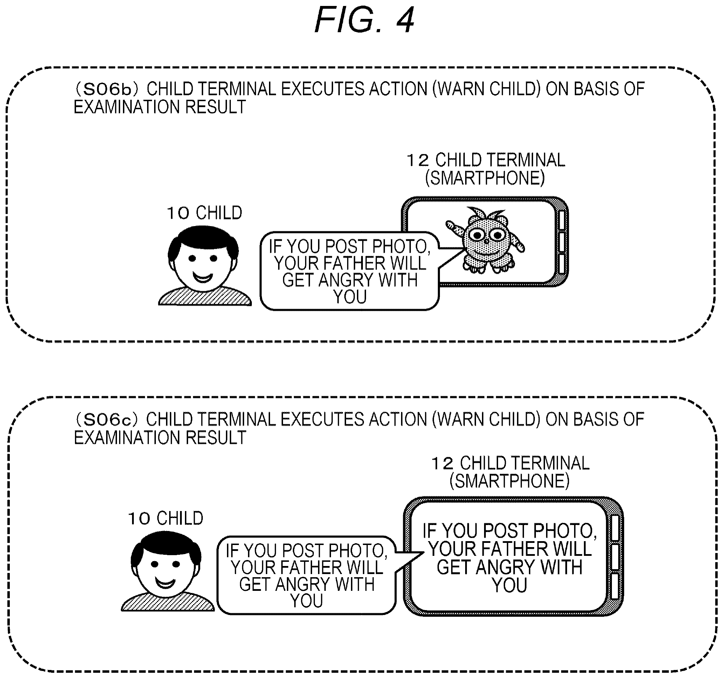

Note that the action executed by the child terminal 12 with respect to the child 10 in step S06 may be configured to be performed, for example, as illustrated in (step S06b) of Fig. 4 in a setting in which an animation image is displayed on the display unit and the animation image is speaking.

Furthermore, as illustrated in (step S06c) of Fig. 4, the configuration may be such that the same text as the speech content, namely,
"If you post a photo, your father will get angry with you,"
is displayed on the display unit while the speech is being output.

Furthermore, as described above, the mode of the action executed by the child terminal 12 with respect to the child 10 is executed in an optimal mode determined on the basis of past user behavior data or the like in step S05.

That is, as described above, the processing is executed by an optimal warning method according to the user's character, such as "teach gently" or "command tightly".

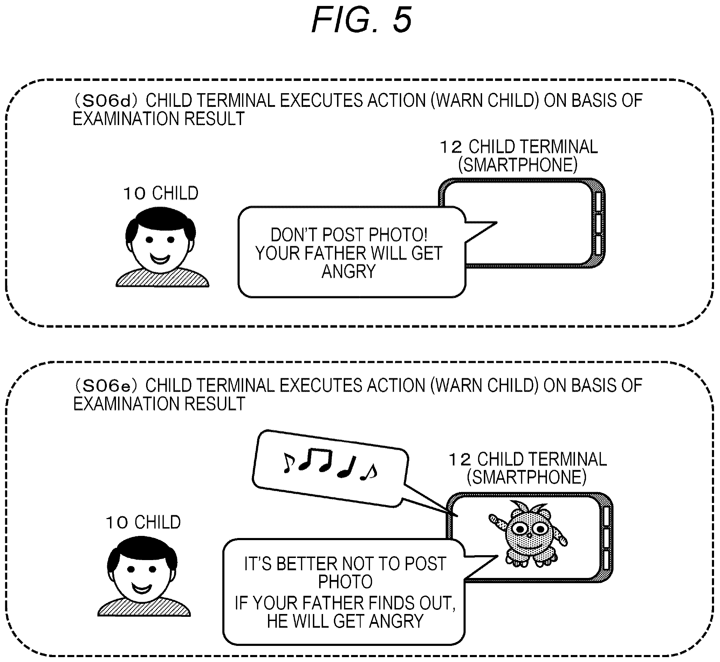

A specific example is illustrated in Fig. 5.

The example of (step S06d) in Fig. 5 is a processing example of warning in the "command tightly" setting.

In this case, as illustrated in Fig. 5 (S06d), the child terminal 12 executes a speech saying,
"Don't post a photo, your father will get angry."

Furthermore, the example of (step S06e) in Fig. 5 is a processing example of warning in the "teach gently" setting.

In this case, as illustrated in Fig. 5 (S06e), the child terminal 12 executes a speech saying,
"It's better not to post photos. If your father finds out, he will get angry."

Furthermore, the BGM is also output along with this speech.

In this manner, the user terminal such as the smartphone analyzes the character of the user who is the action execution target, and executes various actions in an optimal action mode according to the analysis result.

An example of a sequence of processing executed by the information processing apparatus of the present disclosure has been described above with reference to Figs. 1 to 5.

For example, as described in (step S04) of Fig. 2, the information processing apparatus such as a smartphone of the present disclosure acquires not only the behavior of the user of the information processing apparatus but also information of other users from other equipment, and comprehensively examines the information to determine and execute an action such as an optimal proposal.

Furthermore, as described in (step S05) and the like of Fig. 3, the information processing apparatus such as a smartphone of the present disclosure analyzes the character of the user who is the action execution target, and executes various actions in an optimal action mode according to the analysis result.

Note that the processing example described with reference to Figs. 1 to 5 is an example of processing executed by the information processing apparatus of the present disclosure. Various other processing examples will be described later.

### [2. Specific Configuration Examples of Information Processing System and Information Processing Apparatus of Present Disclosure]

Next, specific configuration examples of the information processing system and the information processing apparatus of the present disclosure will be described.

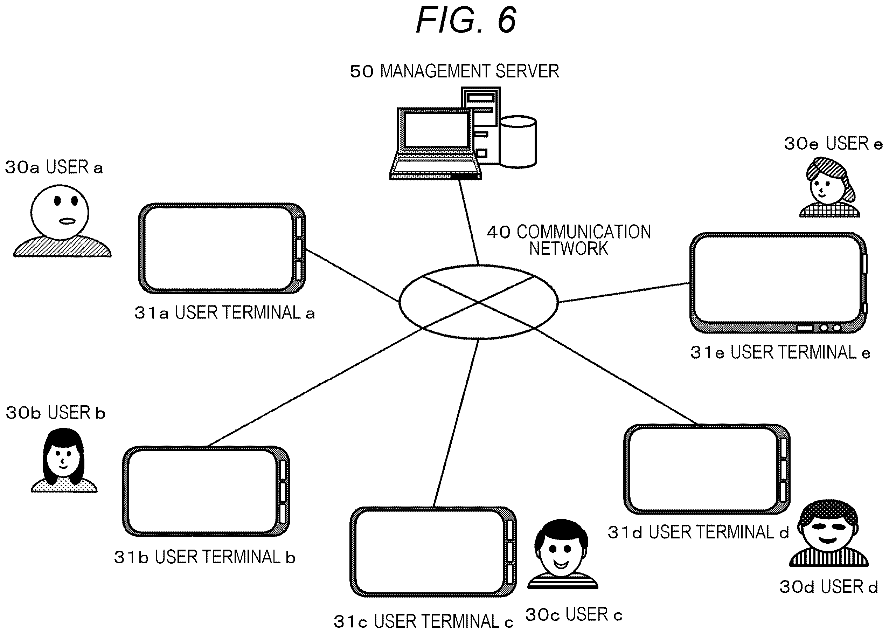

Fig. 6 illustrates a configuration example of the information processing system of the present disclosure.

Fig. 6 illustrates users a, 30a, to e, 30e, user terminals a, 31a, to e, 31e, such as smartphones used by the respective users, a management server 50 as a server that executes communication control processing and the like between the respective terminals, and a communication network 40 used for communication between the respective apparatuses.

Note that only five users and five user terminals are illustrated in Fig. 6, but this only illustrates a part, and there are actually a large number of users and user terminals other than these.

The user terminals a, 31a, to e, 31e, include communicable information processing apparatuses such as a smartphone, a tablet terminal, and a PC.

The processing described with reference to Figs. 1 to 5 is, for example, processing executed using two user terminals among the five user terminals 31 illustrated in Fig. 6.

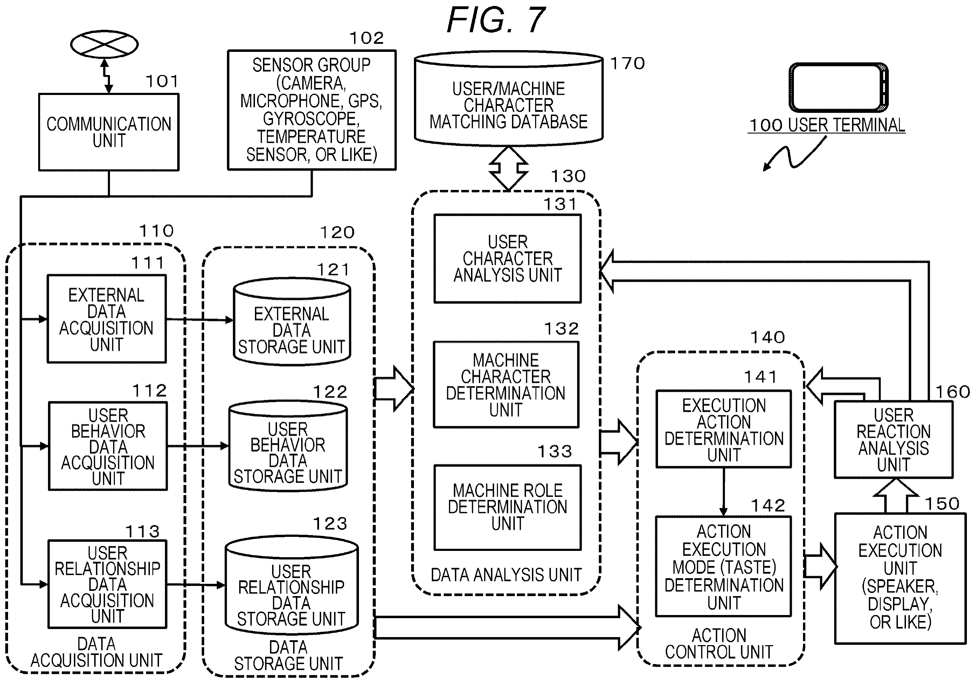

Next, a configuration example of a user terminal corresponding to the information processing apparatus of the present disclosure will be described with reference to Fig. 7.

Fig. 7 illustrates a configuration example of the user terminal 100. The user terminal 100 illustrated in Fig. 7 corresponds to the user terminals a, 31a, to e, 31e, illustrated in Fig. 6.

As illustrated in Fig. 7, the user terminal 100 includes a communication unit 101, a sensor group 102, a data acquisition unit 110, a data storage unit 120, a data analysis unit 130, an action control unit 140, an action execution unit 150, a user reaction analysis unit 160, and a user/machine character matching database 170.

The communication unit 101 executes communication with another user terminal or a management server via the communication network 40 illustrated in Fig. 6.

The sensor group 102 includes, for example, various sensors such as a position sensor such as a camera, a microphone, or a GPS, an acceleration sensor such as a gyroscope, and a sensor that detects a user's operation on the user terminal 100.

The data acquisition unit 110 includes an external data acquisition unit 111, a user behavior data acquisition unit 112, and a user relationship data acquisition unit 113.

In addition, the data storage unit 120 includes an external data storage unit 121, a user behavior data storage unit 122, and a user relationship data storage unit 123.

The external data acquisition unit 111 performs acquisition processing of sensor detection information such as images, sounds, and user operations detected by the sensor group 102 described above, and data acquisition processing from various databases such as a knowledge database accessible via the communication unit 101.

These pieces of data acquired by the external data acquisition unit 111 are stored in the external data storage unit 121 of the data storage unit 120.

The user behavior data acquisition unit 112 analyzes the user's action on the basis of sensor detection information such as an image, a voice, and a user operation detected by the sensor group 102 described above.

Specifically, for example, the user is walking. User behaviors such as running or going out are analyzed. Furthermore, as described above with reference to Figs. 1 to 5, various user behaviors such as trying to post a photo on an SNS site or being scolded by a father are analyzed.

This user behavior analysis processing can be executed using, for example, an AI function such as a learning model generated in advance. Note that the AI function such as the learning model may be configured in the terminal, or may be configured to use the AI function of an external apparatus accessible via a network.

The user behavior data analyzed by the user behavior data acquisition unit 112 is stored in the user behavior data storage unit 122 of the data storage unit 120.

The user relationship data acquisition unit 113 analyzes sensor detection information such as an image, a voice, and a user operation detected by the sensor group 102 described above and information that can be acquired from another user terminal connected via the communication network 40 illustrated in Fig. 6, estimates a relationship between a user who uses the user terminal 100 and another user, and generates user relationship data as an estimation result.

Note that the user relationship data acquisition unit 113 can also receive behavior data of another user acquired in another user terminal from another user terminal via the communication network.

However, in order to receive the behavior data of another user, it is necessary to permit the provision of the behavior data in the user terminal used by the behavior data acquisition target user.

That is, it is necessary to register a user or a user terminal that may transmit behavior data in advance. Details of the behavior data transmission setting processing will be described later.

The user relationship data generated by the user relationship data acquisition unit 113 is stored in the user relationship data storage unit 122 of the data storage unit 120.

The data analysis unit 130 includes a user character analysis unit 131, a machine character analysis unit 132, and a machine role determination unit 133.

The user character analysis unit 131 analyzes the character of the user who uses the user terminal 100 using the data stored in the data storage unit 120. For example, the character of the user, such as being self-centered or polite, is analyzed.

The user character analysis unit 131 analyzes what kind of character (personality) the user is, on the basis of, for example, past behavior data of the user stored in the user behavior data storage unit 122 in the data storage unit 120, data indicating a relationship with the user stored in the user relationship data storage unit 123, and the like.

This user character analysis processing can be executed using, for example, an AI function such as a learning model generated in advance. Note that, as described above, the AI function such as the learning model may be configured in the terminal, or may be configured to use the AI function of an external apparatus accessible via a network.

The machine character determination unit 132 determines an action execution entity for the user who uses the user terminal 100, specifically, a character of the user terminal itself. Note that, here, the "machine" corresponds to the user terminal 100.

In the processing example described with reference to Figs. 1 to 5, the child terminal 12, which is the execution entity of the advice to the child 10, namely,

"If you post a photo, your father will get angry with you,"
corresponds to the "machine."

As described with reference to Figs. 4 and 5, the information processing apparatus such as the smartphone of the present disclosure analyzes the character of the user who is the action execution target, and executes various actions in an optimal action mode according to the analysis result.

The machine character determination unit 132 performs processing of determining an optimal machine character for executing an action in this optimal action mode.

That is, the machine character determination unit 132 determines an optimal machine character according to the user character analyzed by the user character analysis unit 131.

The machine character determination unit 132 refers to the user/machine character matching database 170 illustrated in Fig. 7 to determine an optimal machine character according to the user character.

Note that, in Fig. 7, the user/machine character matching database 170 is set in the user terminal 100, but the user/machine character matching database 170 may not be configured in the user terminal 100, and may be an external database accessible via the communication unit 101.

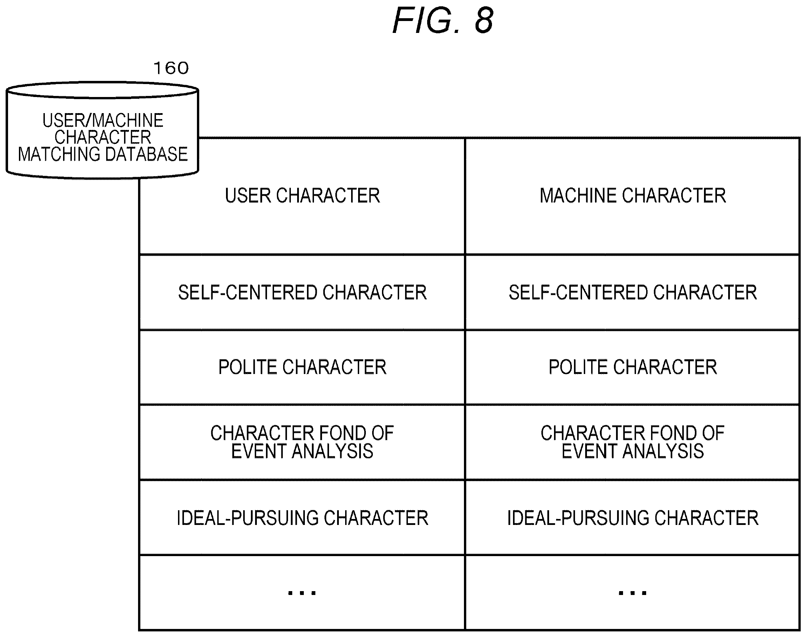

Fig. 8 is a diagram illustrating an example of data stored in the user/machine character matching database 170.

The user/machine character matching database 170 stores correspondence data of a user character and a machine character compatible with the user character.

The apparatus 100 of an information type such as a machine, that is, a smartphone makes various proposals and advices to the user. In order for the user to simply accept the advice the machine gives to the user, it is necessary that the user and the machine are compatible.

That is, it is best that the machine has a character that is most compatible with the user's character.

The user/machine character matching database 170 is a database in which machine characters compatible with various user characters are recorded.

In the example illustrated in Fig. 8, the following various characters are recorded as the user character.
User character = self-centered character
User character = polite character
User character = character fond of event analysis
User character = ideal-pursuing character

In the database, machine characters compatible with these various user characters are recorded. That is,
In the case of "user character = self-centered character", a compatible machine character is "machine character = self-centered character".

In the case of "user character = polite character", a compatible machine character is "machine character = polite character".

In the case of "user character = character fond of event analysis", a compatible machine character is "machine character = character fond of event analysis".

In the case of the user character = ideal-pursuing character, a compatible machine character is "machine character = ideal-pursuing character".

In this manner, the machine character determination unit 132 refers to the user/machine character matching database 170 in which the machine characters compatible with the user character are recorded in association with each other, and determines the optimal machine character corresponding to the user character.

Note that Fig. 8 is an example of data stored in the user/machine character matching database 170, and a database having another data configuration may be used.

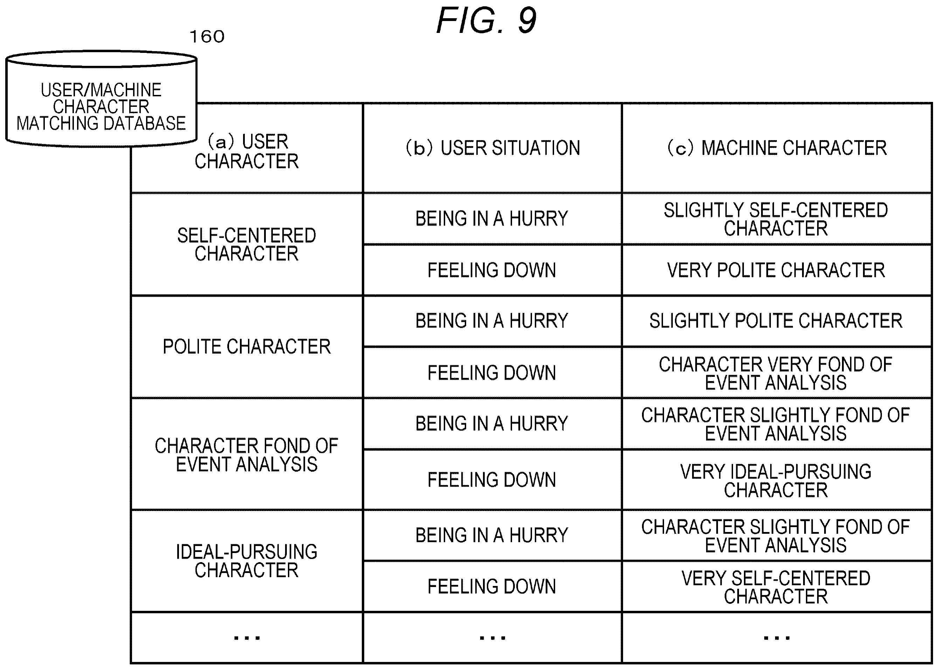

For example, a user/machine character matching database 170 storing data as illustrated in Fig. 9 may be used.

The database illustrated in Fig. 9 is a database in which
(a) user characters,
(b) user situations, and
(c) machine characters
are associated with each other and set.

The user/machine character matching database 170 illustrated in Fig. 9 is a database in which a machine character that is compatible with one user character is set to be changed according to the current user situation.

For example, in the case where "user character = self-centered character", and
the current user situation is a "being in a hurry" state,
the compatible machine character is "machine character = slightly self-centered character".

However, in the case where the user characters are the same "user character = self-centered character", and
the current user situation is a "not in a hurry" state,
the compatible machine character is "machine character = very polite character".

As described above, the user/machine character matching database 170 illustrated in Fig. 9 is a database in which machine characters compatible with one user character are set to be changed according to the current user situation.

In this manner, the machine character determination unit 132 may perform processing of determining a machine character that is compatible with the user character in consideration of the current user situation.

Note that the current user situation can be determined on the basis of the data stored in the user behavior data storage unit 122 of the data storage unit 120.

Next, the machine role determination unit 133 of the data analysis unit 130 of the user terminal 100 illustrated in Fig. 7 will be described.

The machine role determination unit 133 of the data analysis unit 130 determines a role to be executed by the machine.

Specifically, for example, the machine advises the user. Alternatively, the machine comforts the user or reports to the user. The machine role determination unit 133 determines the role that the machine should execute, such as listening to the user's concerns.

The machine role determination unit 133 inputs data stored in the data storage unit 123, that is, external data stored in the external data storage unit 121, user behavior data stored in the user behavior data storage unit 122, data indicating a relationship with another user stored in the user relationship data storage unit 123, and determines a role to be executed by the machine for the user.

Specifically, for example, in the processing example described with reference to Figs. 1 to 5, the role of the machine is to stop the photo posting of the child (user).

The machine role determination processing executed by the machine role determination unit 133 can be executed using, for example, an AI function such as a learning model generated in advance. Note that, as described above, the AI function such as the learning model may be configured in the terminal, or may be configured to use the AI function of an external apparatus accessible via a network.

Next, a configuration of the action control unit 140 of the user terminal 100 illustrated in Fig. 7 and processing to be executed will be described.

As illustrated in Fig. 7, the action control unit 140 includes an execution action determination unit 141 and an action execution mode (taste) determination unit 142.

The execution action determination unit 141 decides an action to be executed by the machine, that is, the user terminal 100.

That is, a specific action to be executed to fulfill the role of the machine determined by the machine role determination unit 133 is determined.

For example, various execution actions such as warning, advice, suggestion, and report to the user are determined.

For example, when the role of the machine determined by the machine role determination unit 133 is the "role of advising the user", specific contents to be advised are determined.

In addition, when the role of the machine determined by the machine role determination unit 133 is the "role of comforting the user", words and music for comforting are determined.

If the role of the machine determined by the machine role determination unit 133 is the "role of listening to the user's concerns", processing such as determining words to comfort the user or questions to ask the user's concerns is performed.

For example, in the processing example described with reference to Figs. 1 to 5, the role of the machine is to stop the photo posting of the child (user), and in this case, the execution action determination unit 141 determines a specific action of "outputting a comment for stopping the photo posting" to the child (user).

The processing executed by the execution action determination unit 141 can also be executed using, for example, an AI function such as a learning model generated in advance. Note that, as described above, the AI function such as the learning model may be configured in the terminal, or may be configured to use the AI function of an external apparatus accessible via a network.

The action execution mode (taste) determination unit 142 determines the execution mode (taste) of the execution action determined by the execution action determination unit 141.

Note that the determination processing of the action execution mode (taste) is executed so as to reflect the machine character determined by the machine character determination unit 132 and the machine role determined by the machine role determination unit 133.

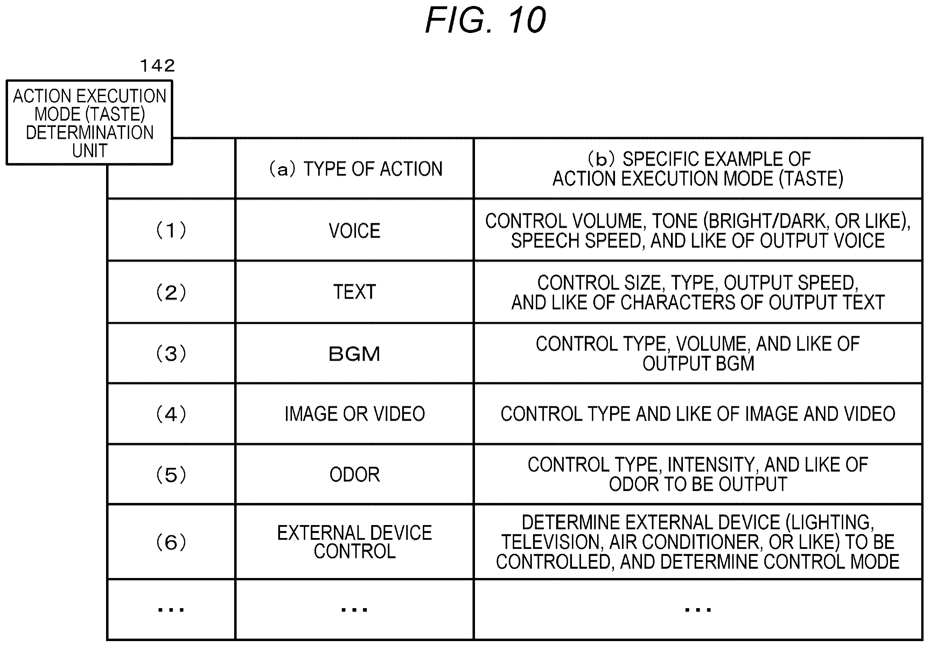

A determination processing example of an execution mode (taste) of an action executed by the action execution mode (taste) determination unit 142 will be described with reference to Fig. 10.

The user terminal 100 that is a machine can perform various actions on the user. Specifically, it is possible to execute various actions such as voice output of comments, BGM, and the like, image output, or control of other equipment connected to a network, for example, lighting, television, air conditioner, and the like.

The execution action determination unit 141 decides which action to execute. The action execution mode (taste) determination unit 142 determines the execution mode (taste) of the action determined by the execution action determination unit 141.

Fig. 10 illustrates "(a) type of execution action" determined by the execution action determination unit 141 and "(b) specific example of action execution mode" determined by the action execution mode (taste) determination unit 142 for the execution action in association with each other.

As illustrated in Fig. 10, for example, in a case where the action determined by the execution action determination unit 141 is voice output, the action execution mode (taste) determination unit 142 determines the volume, tone (bright/dark, or the like), speech speed, and the like of the output voice.

Furthermore, in a case where the action determined by the execution action determination unit 141 is text output to the display unit, the action execution mode (taste) determination unit 142 determines the size, type, output speed, and the like of characters of the output text.

In a case where the action determined by the execution action determination unit 141 is the BGM output, the action execution mode (taste) determination unit 142 determines the type, volume, and the like of the output BGM.

In a case where the action determined by the execution action determination unit 141 is output of an image or a video to the display unit, the action execution mode (taste) determination unit 142 determines the type or the like of the output image or the video.

In a case where the action determined by the execution action determination unit 141 is the output of the odor, the action execution mode (taste) determination unit 142 determines the type, intensity, and the like of the odor to be output.

In a case where the action determined by the execution action determination unit 141 is control of an external device, the action execution mode (taste) determination unit 142 determines an external device to be controlled, a control mode, or the like.

In this manner, the action execution mode (taste) determination unit 142 determines the execution mode (taste) of the execution action determined by the execution action determination unit 141.

Returning to Fig. 7, the description of the configuration and processing of the user terminal 100 will be continued.

As described above, the execution action determination unit 141 of the action control unit 140 determines an action to be executed by the machine, that is, the user terminal 100. That is, a specific action to be executed to fulfill the role of the machine determined by the machine role determination unit 133 is determined.

Further, the action execution mode (taste) determination unit 142 determines an execution mode (taste) of the execution action determined by the execution action determination unit 141.

The action execution unit 150 executes the execution action determined by the execution action determination unit 141 of the action control unit 140 according to the execution mode (taste) determined by the action execution mode (taste) determination unit 142.

Note that, specifically, the action execution unit 150 includes a speaker that outputs a voice or BGM, a display unit (display) that displays an image or a video, a command generation unit that generates and outputs a command for controlling another device, an odor generation unit for odor output, and the like.

The user reaction analysis unit 160 analyzes the reaction of the user to the action executed by the action execution unit 150.

For example, the response of the user is analyzed, such as whether the machine (user terminal 100) follows or does not follow the advice presented or whether or not the user smiles at the comforting of the machine (user terminal 100).

The user reaction analysis processing executed by the user reaction analysis unit 160 can also be executed using, for example, an AI function such as a learning model generated in advance. Note that, as described above, the AI function such as the learning model may be configured in the terminal, or may be configured to use the AI function of an external apparatus accessible via a network.

The user reaction analysis result generated by the user reaction analysis unit 160 is fed back and input to the data analysis unit 130 and the action control unit 140.

For example, in a case where it is analyzed that the user reaction is insufficient, for example, in a case where it is confirmed that the advice of the machine is ignored, or the like, processing of changing the execution action and executing a different action again is executed.

### [3. Sequence of Processing Executed by Information Processing Apparatus of Present Disclosure]

Next, a sequence of processing executed by the information processing apparatus of the present disclosure will be described.

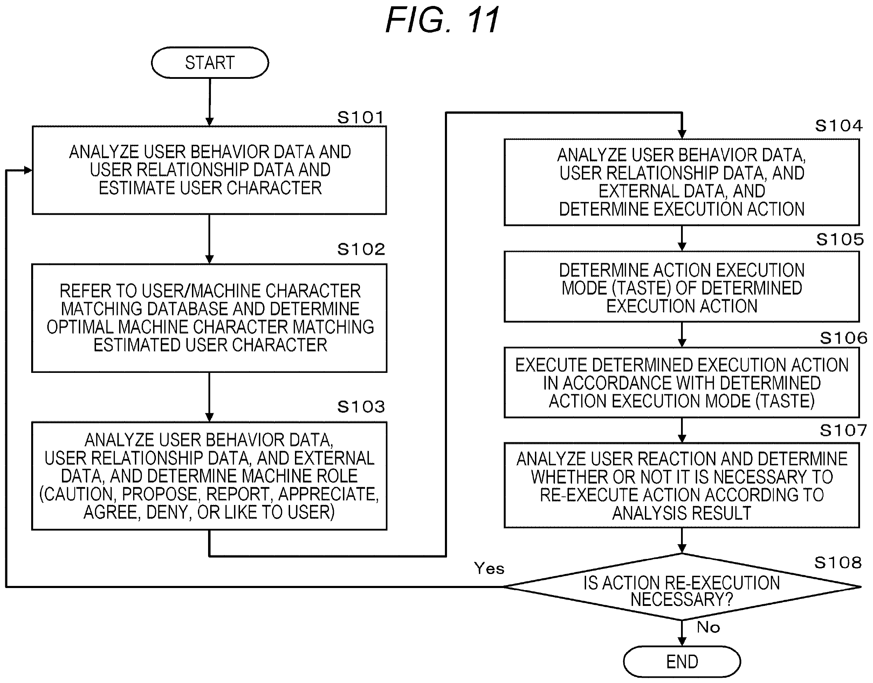

The flowchart illustrated in Fig. 11 is a flowchart for explaining a sequence of processing executed by the information processing apparatus of the present disclosure, for example, the user terminal 100 such as the smartphone described with reference to Fig. 7.

Note that the flow illustrated in Fig. 11 is a flow for explaining processing executed by the data analysis unit 130, the action control unit 140, the action execution unit 150, and the user reaction analysis unit 160 of the user terminal 100 illustrated in Fig. 11.

The flow illustrated in Fig. 11 is executed under the control of the control unit (data processing unit) of the user terminal according to the program stored in the storage unit of the user terminal which is the information processing apparatus of the present disclosure. The control unit (data processing unit) includes, for example, a processor such as a CPU having a program execution function, and can perform processing according to the flow by program execution processing using the processor.

Hereinafter, processing of each step of the flow illustrated in Fig. 11 will be sequentially described.

### (Step S101)

First, in step S101, the user behavior data and the user relationship data stored in the data storage unit 120 are analyzed to estimate a user character.

This process is a process executed by the user character analysis unit 131 of the data analysis unit 130 illustrated in Fig. 7.

The user character analysis unit 131 of the data analysis unit 130 analyzes what kind of character (personality) the user is, on the basis of past behavior data of the user stored in the user behavior data storage unit 122 in the data storage unit 120, data indicating a relationship with the user stored in the user relationship data storage unit 123, and the like.

Note that, as described above, the user character analysis processing can be executed using, for example, an AI function such as a learning model generated in advance.

### (Step S102)

Next, in step S102, an optimal machine character matching the user character estimated in step S101 is determined with reference to the user/machine character matching database.

This process is a process executed by the machine character determination unit 132 of the data analysis unit 130 illustrated in Fig. 7.

Note that, as described above, the "machine" corresponds to the user terminal 100.

As described above with reference to Figs. 8 and 9, the user/machine character matching database 170 is a database in which machine characters compatible with various user characters are recorded.

The machine character determination unit 132 refers to the user/machine character matching database 170 to determine an optimal machine character matching the user character estimated in step S101.

### (Step S103)

Next, in step S103, the user behavior data, the other user relationship data, and the external data stored in the data storage unit 120 are analyzed to determine a machine role (caution, propose, report, appreciate, agree, deny, or the like to user).

This process is a process executed by the machine role determination unit 133.

Specifically, for example, the machine advises the user. Alternatively, the machine comforts the user or reports to the user. The machine role determination unit 133 determines the role that the machine should execute, such as listening to the user's concerns.

### (Step S104)

Next, in step S104, the user behavior data, the user relationship data, and the external data stored in the data storage unit 120 are analyzed to determine an execution action.

This processing is processing executed by the execution action determination unit 141 in the action control unit 140 illustrated in Fig. 7.

The execution action determination unit 141 decides an action to be executed by the machine, that is, the user terminal 100. Specifically, a specific action to be executed to fulfill the role of the machine determined by the machine role determination unit 133 in step S103 is determined.

### (Step S105)

Next, in step S105, an execution mode (taste) of the action determined in step S104 is determined.

Note that, as described above, the determination processing of the action execution mode (taste) is executed so as to reflect the machine character determined by the machine character determination unit 132 and the machine role determined by the machine role determination unit 133.

Note that the determination processing of the action execution mode (taste) is performed according to the type of action determined by the execution action determination unit 141 as described above with reference to Fig. 10. For example, in a case where the action determined by the execution action determination unit 141 is voice output, the action execution mode (taste) determination unit 142 determines the volume, tone (bright/dark, or the like), speech speed, and the like of the output voice.

### (Step S106)

Next, in step S106, the execution action determined in step S104 is executed according to the action execution mode (taste) determined in step S105.

This processing is processing executed by the action execution unit 150 illustrated in Fig. 7.

As described above, specifically, the action execution unit 150 includes a speaker that outputs a voice or BGM, a display unit (display) that displays an image or a video, a command generation unit that generates and outputs a command for controlling another device, a smell generation unit for odor output, and the like.

### (Step S107)

Next, in step S107, the user reaction is analyzed, and it is determined whether or not it is necessary to re-execute the action according to the analysis result.

This processing is processing executed by the user reaction analysis unit 160 illustrated in Fig. 7.

The user reaction analysis unit 160 analyzes the reaction of the user to the action executed by the action execution unit 150.

As described above, the user's reaction is analyzed, for example, whether the machine (user terminal 100) follows the advice presented or does not follow the advice, whether or not the user smiles at the comforting of the machine (user terminal 100), or the like.

### (Step S108)

Further, in step S108, it is determined whether or not re-execution of an action is necessary.

This processing is also executed by the user reaction analysis unit 160 illustrated in Fig. 7.

The user reaction analysis unit 160 analyzes the reaction of the user to the action executed by the action execution unit 150, and in a case where the user reaction is insufficient, for example, in a case where it is confirmed that the advice of the machine is ignored, or the like, the user reaction analysis unit determines that it is necessary to change the execution action and execute a different action again, and repeats the processing of step S101 and subsequent steps.

On the other hand, in a case where the user reaction is sufficient, for example, in a case where it is confirmed that the user follows the advice of the machine, the processing is terminated.

As described above, the information processing apparatus such as the smartphone of the present disclosure analyzes the character of the user who is the action execution target, and determines the optimal character and role of the machine according to the analysis result. Further, an action to be executed for the user and an execution mode (taste) of the action are determined, and the determined action is executed.

By performing such processing, it is possible to perform an action such as the most effective advice to the user.

Note that, in the example of the processing sequence described above with reference to Figs. 1 to 3, in step S04 of Fig. 2, the child terminal 12 performs processing of communicating with the father terminal 22 and determining an action to be executed.

In the flowchart illustrated in Fig. 11, basically, the example in which the processing is performed in one user terminal that executes the action has been described. However, for example, the machine role determination processing and the execution action determination processing in steps S103 to S104 of the flow illustrated in Fig. 11 may be configured to perform processing in consideration of stored data in another user terminal, for example, behavior data of a user of another terminal stored in another user terminal by performing communication with another user terminal.

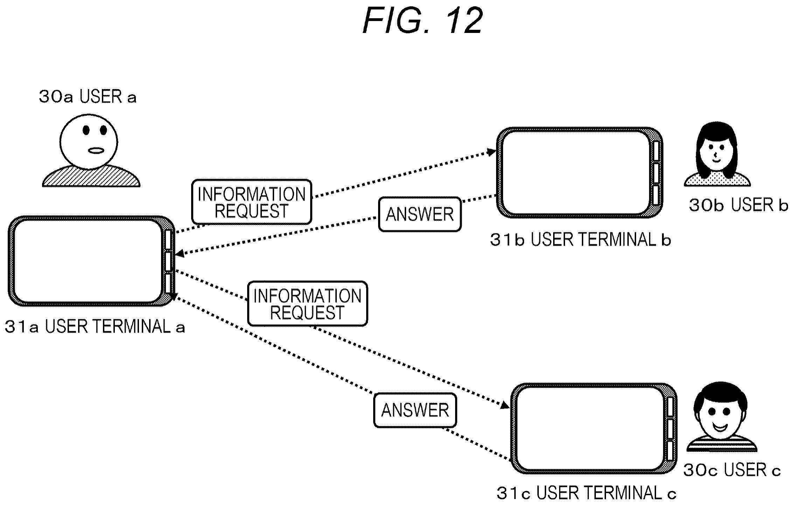

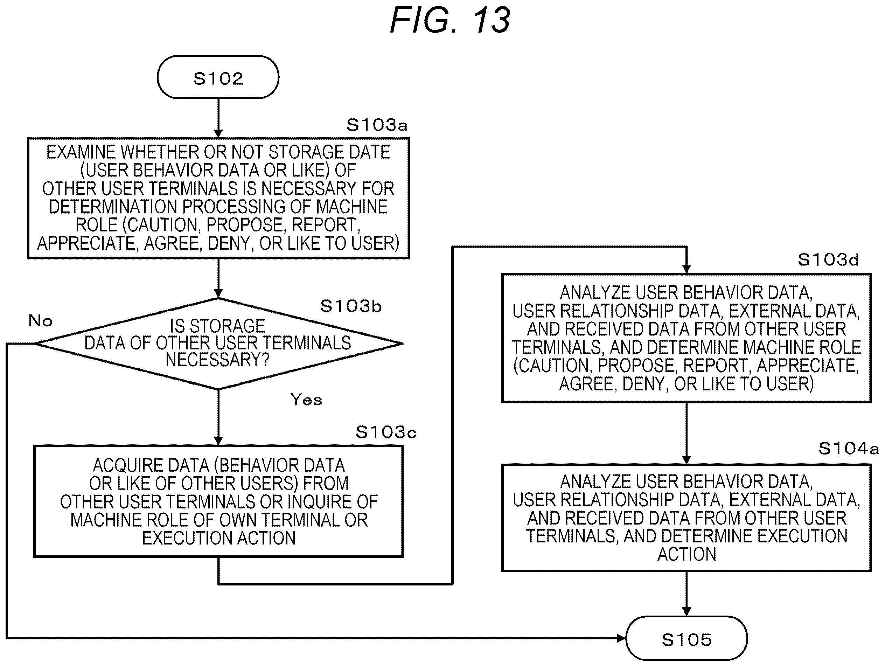

A processing example in which the determination processing of the machine role and the determination processing of the execution action are performed by the communication processing between the plurality of terminals using the stored data of both terminals or the like will be described with reference to Figs. 12 and 13.

Fig. 12 is a diagram for explaining an example of terminal-to-terminal communication when the machine role determination processing and the execution action determination processing are performed.

The user terminal a, 31a, of the user a, 30a, illustrated in Fig. 12 is a terminal that performs machine role determination processing and execution action determination processing. The user terminal a, 31a, executes communication with other user terminals, for example, the user terminal b, 31b, of the user b, 30b, and the user terminal c, 31c, of the user c, 30c, illustrated in Fig. 12, and perform determination processing of the machine role and execution action of the user terminal a, 31a.

As illustrated in Fig. 12, the user terminal a, 31a, transmits information requests to the user terminal b, 31b, and the user terminal c, 31c, and the user terminal b, 31b, and the user terminal c, 31c, generate answers to the information requests with reference to the user behavior data of each user, the other user relationship data, and the like stored in the own terminals, and transmit the answers to the user terminal a, 31a.

The user terminal a, 31a, performs determination processing of the machine role and the execution action of the user terminal a, 31a, in consideration of the answer data acquired from the other terminals.

The series of processing can be executed using, for example, an AI function such as a learning model generated in advance. Note that, as described above, the AI function such as the learning model may be configured in the terminal, or may be configured to use the AI function of an external apparatus accessible via a network.

The flowchart illustrated in Fig. 13 is a flowchart for explaining a specific sequence in a case where the machine role determination processing and the execution action determination processing are executed by communicating with another user terminal.

That is, the flowchart illustrated in Fig. 13 is a flow for explaining a specific sequence in a case where the machine role determination processing and the execution action determination processing in steps S103 to S104 of the flow illustrated in Fig. 11 are performed in consideration of stored data in another user terminal, for example, behavior data of a user of another terminal stored in another user terminal by communicating with another user terminal.

Steps S103a to S103d in the flowchart illustrated in Fig. 13 correspond to the processing of step S103 in the flow illustrated in Fig. 11, that is, the machine role determination processing. Further, step S104 of the flow illustrated in Fig. 13 corresponds to the processing of step S104 of the flow illustrated in Fig. 11, that is, the determination processing of the execution action of the machine.

The processing of each step of the flow illustrated in Fig. 13 will be described.

### (Step S103a)

The processing in step S103a of the flow illustrated in Fig. 13 is executed after the processing in step S102 of the flow illustrated in Fig. 11.

That is, in step S102, the processing is executed after the determination processing of the optimal machine character matching the user character estimated in step S101 with reference to the user/machine character matching database.

When the machine character determination processing is completed, the user terminal executes the processing of step S103a.

In step S103a, the user terminal executes verification processing as to whether or not it is necessary to refer to data stored in another user terminal (behavior data of another user or the like) in the processing of determining a machine role (caution, propose, report, appreciate, agree, deny, or the like to user).

This process is a process executed by the machine role determination unit 133. As described above, the machine role advises the user, for example. Alternatively, the machine comforts the user or reports to the user. It is a role that the machine should execute, such as listening to the user's concerns.

In this process, whether it is better to refer to the stored data of another user terminal is verified.

For example, in the processing example described above with reference to Figs. 1 to 3, by acquiring the behavior data of the father 20 from the stored data of the father terminal 22, it is possible to obtain information of the father's personality, for example, angry or gentle, and by determining the role or action of the machine according to this information, it is possible to perform more accurate processing.

Note that, also in the processing of step S103a, for example, an AI function such as a learning model generated in advance can be used. Note that, as described above, the AI function such as the learning model may be configured in the terminal, or may be configured to use the AI function of an external apparatus accessible via a network.

### (Step S103b)

Step S103b is a process branching step corresponding to the result of the verification processing of step S103a.

In a case where it is determined that it is better to refer to the stored data of another user terminal as a result of the verification processing in step S103a, the process proceeds to step S103c.

On the other hand, as a result of the verification processing in step S103a, in a case where it is determined that it is not necessary to refer to the stored data of another user terminal, the process proceeds to step S105 of the flow illustrated in Fig. 11. In this case, processing using only the data stored in the own terminal is executed according to the flowchart illustrated in Fig. 11 described above.

### (Step S103c)

In a case where it is determined in step S103b that it is better to refer to the stored data of another user terminal, the process proceeds to step S103c.

In this case, the user terminal acquires data (behavior data or the like of another user) from another user terminal. Alternatively, an inquiry is made to another user terminal about how to perform a machine role or an execution action of the own terminal.

In a case where an inquiry is made to another user terminal about how to perform the machine role or the execution action of the own terminal, the other user terminal transmits an answer regarding the machine role or the execution action by, for example, analyzing a relationship between the user of the other user terminal and the user of the user terminal of the inquiry source with reference to, for example, the user relationship data in the terminal.

This processing can be executed using, for example, an AI function such as a learning model.

### (Step S103d)

Next, in step S103d, the user terminal that has performed data acquisition or inquiry from another user terminal analyzes the user behavior data, the user relationship data, and the external data stored in the own terminal, and the received data from another user terminal, and determines a machine role (caution, propose, report, appreciate, agree, deny, or the like to user).

This process is a process executed by the machine role determination unit 133.

Specifically, for example, the machine advises the user. Alternatively, the machine comforts the user or reports to the user. The machine role determination unit 133 determines the role that the machine should execute, such as listening to the user's concerns.

### (Step S104a)

Next, in step S104a, the user behavior data, the user relationship data, and the external data stored in the data storage unit 120, and the data received from another user terminal are analyzed to determine the execution action.

This processing is processing executed by the execution action determination unit 141 in the action control unit 140 illustrated in Fig. 7.

The execution action determination unit 141 decides an action to be executed by the machine, that is, the user terminal 100. Specifically, a specific action to be executed to fulfill the role of the machine determined by the machine role determination unit 133 in step S103 is determined.

Note that, also in the determination processing of the execution action in step S104a, a proposal for the action to be executed may be received from another user terminal, and processing in consideration of the proposal may be performed.

After these processes, the process proceeds to step S105 of the flow illustrated in Fig. 11, and an execution mode (taste) of the action determined in step S104 is determined.

Thereafter, an action is executed in step S106.

In the flow illustrated in Fig. 13, not only the analysis of the stored data in one user terminal but also the determination processing of the final role and execution action of the machine is performed using the stored data of the other user terminal, the proposal based on the analysis result in the other user terminal, or the like.

By performing such processing, it is possible to perform more accurate machine role and action determination processing on the basis of a more detailed analysis result of actions and relationships of a plurality of users.

### [4. UI for Setting Recording Processing of User Behavior Data and Providing Processing to Other User Terminal]

Next, a UI (user interface) for setting the recording processing of the user behavior data and the providing processing to the other user terminal will be described.

The processing described with reference to Figs. 12 and 13 is processing in which one user terminal executes communication with another user terminal and determines a role of a machine and an action to be executed.

In order to perform these processes, it may be necessary to acquire user behavior data or the like stored in the user terminal from another user terminal.

Furthermore, as described above with reference to Fig. 7, the user relationship data acquisition unit 113 of the user terminal 100 may receive behavior data of another user acquired in another user terminal via the communication network.

However, in order to receive the behavior data of another user, it is necessary to permit the provision of the behavior data in the user terminal used by the behavior data acquisition target user.

That is, it is necessary to register a user or a user terminal that may transmit behavior data in advance.

Hereinafter, details of setting processing in a case where behavior data is transmitted and received between user terminals will be described.

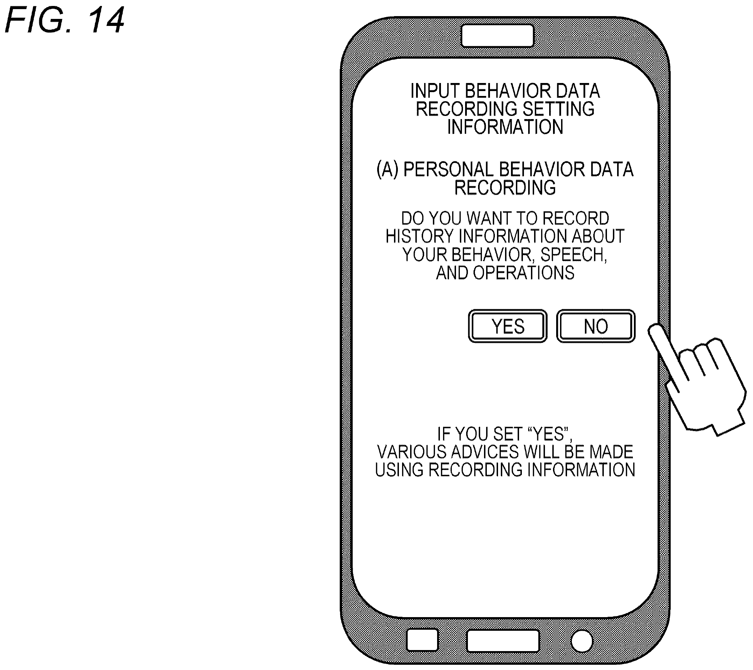

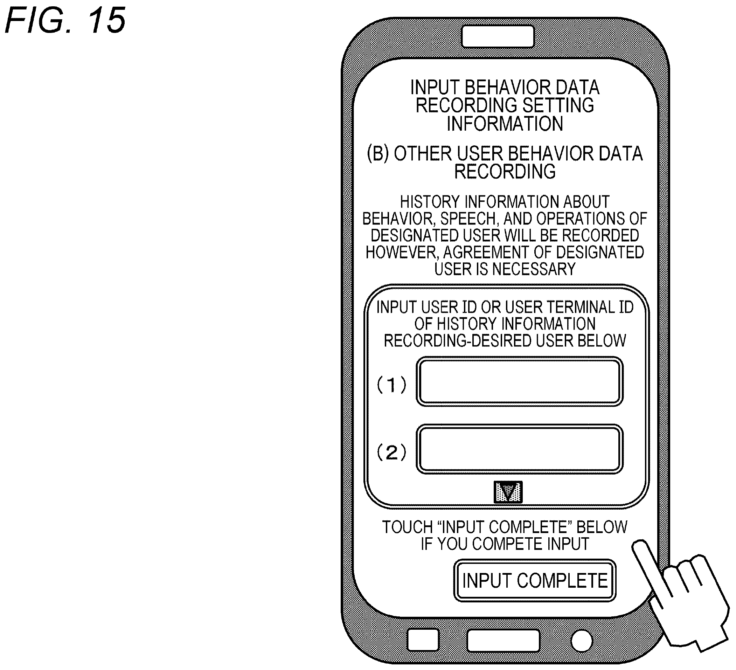

A UI for setting recording processing of the user behavior data and providing processing of the user behavior data to another user terminal will be described with reference to Figs. 14 and 15.

A UI illustrated in Fig. 14 is an example of a UI for setting whether or not to record own behavior data in the own terminal.

As illustrated in Fig. 14,
(A) Personal behavior data recording,
   for this setting item, the user can set it by touching either "Yes" or "No."

By touching "Yes", the user behavior information acquired by a camera, a microphone, or other sensors of the user terminal is acquired by the user behavior data acquisition unit 112 and stored in the user behavior data storage unit 122.

Furthermore, the UI illustrated in Fig. 15 is an example of a UI for setting whether or not to record behavior data of another user other than the user himself/herself in the own terminal.

As illustrated in Fig. 15,
(B) Other user behavior data recording,
for this setting item, the user inputs the user ID of another user whose behavior data is to be recorded, or the user terminal ID of the other user, and upon completion of the input, touches "input complete."

With this processing, data input by the user is transmitted to the management server 50.

The management server 50 inquires of the user terminal of the user whose behavior data is to be recorded whether or not to permit the behavior data recording request from another user terminal on the basis of the input data of the user.

In a case where an answer indicating that the action recording is permitted or not permitted is obtained in response to the inquiry, the management server 50 transmits an answer result of "permitted" or "not permitted" to the behavior data recording request terminal. Furthermore, terminal information and the like for transmitting and receiving behavior data are recorded and held as management data in a storage unit in the management server 50.

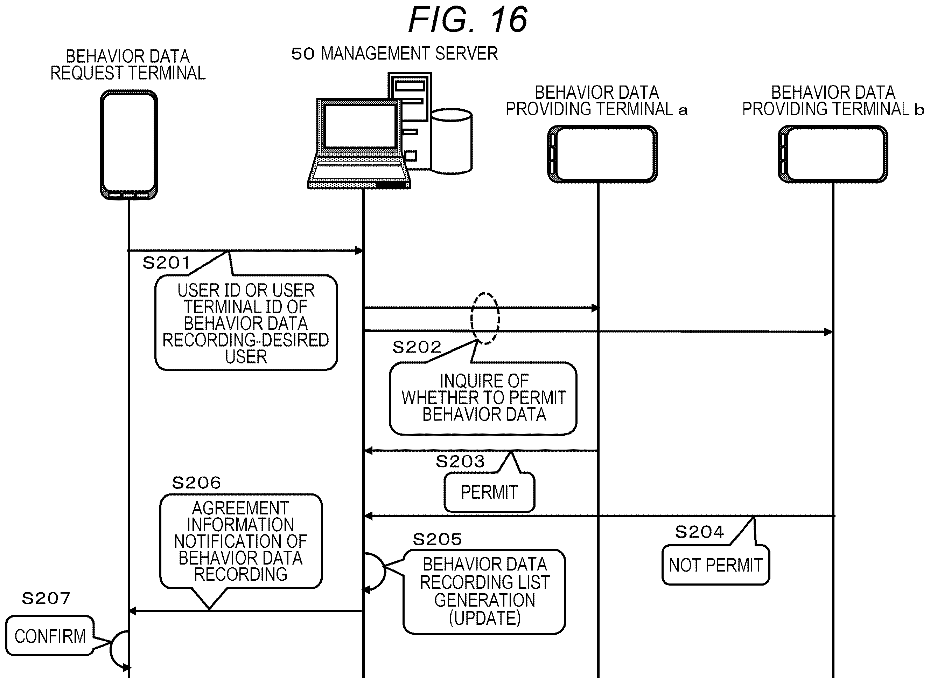

An example of a sequence of this processing will be described with reference to Fig. 16.

Fig. 16 illustrates the following apparatuses from the left.
(1) "Behavior data request terminal" that requests behavior data of another user
(2) Management server 50
(3) "Behavior data providing terminal a" that provides its own behavior data to "behavior data request terminal"
(4) "Behavior data providing terminal b" that provides its own behavior data to "behavior data request terminal"

The processing of steps S201 to S207 is sequentially executed between these apparatuses.

Hereinafter, these processes will be sequentially described.

### (Step S201)

First, in step S201, the behavior data request terminal transmits the user ID of the user whose behavior data is desired to be recorded or the user terminal ID to the management server 50.

This processing is processing executed using the UI described above with reference to Fig. 15.

### (Step S202)

Next, in step S202, the management server 50 that has received the data from the behavior data request terminal inquires of the user terminal of the designated user whether or not to permit the behavior data recording request on the basis of the user ID or the user terminal ID received from the behavior data request terminal.

In the example illustrated in the figure, an inquiry is made to the "behavior data providing terminal a" and the "behavior data providing terminal b".

### (Step S03)

Step S03 is a response from the "behavior data providing terminal a".

The "behavior data providing terminal a" transmits, to the management server 50, a response indicating that the behavior data recording request from the "behavior data request terminal" is permitted.

### (Step S04)

Step S04 is a response from the "behavior data providing terminal b".

The "behavior data providing terminal b" transmits, to the management server 50, a response indicating that the behavior data recording request from the "behavior data request terminal" is not permitted.

### (Step S05)

The management server 50 generates or updates the "behavior data transmission/reception terminal management data" according to the responses from the "behavior data providing terminal a" and the "behavior data providing terminal a", and stores the data in the storage unit in the server 50.

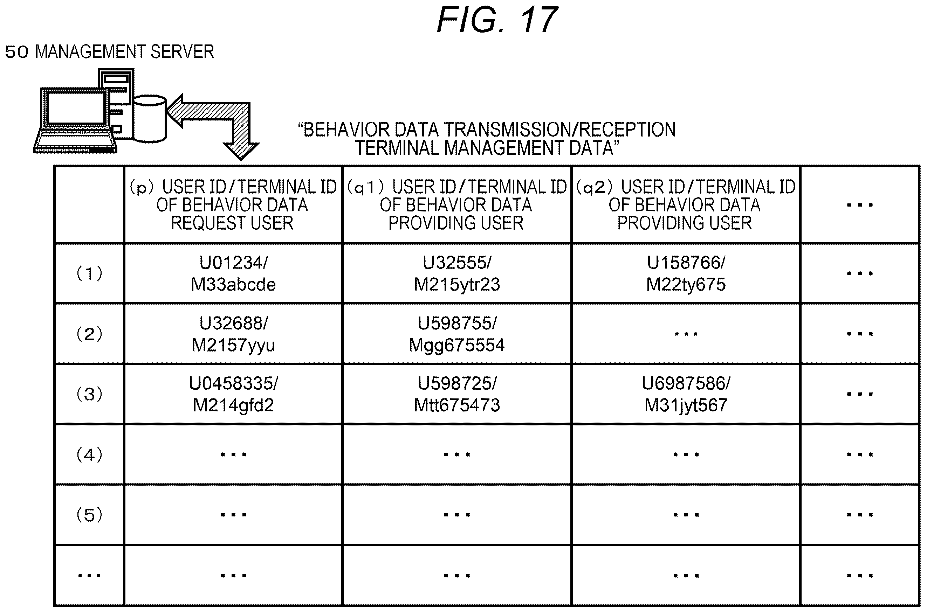

A specific example of the "behavior data transmission/reception terminal management data" generated or updated by the management server 50 will be described with reference to Fig. 17.

The "behavior data transmission/reception terminal management data" illustrated in Fig. 17 is management data in which the following pieces of data are registered in association with each other:
(p) User ID/terminal ID of behavior data requesting user
(From q1) User ID/terminal ID of behavior data providing user

The management server 50 executes transmission and reception management of the behavior data of the user acquired by each user terminal on the basis of the "behavior data transmission/reception terminal management data".

That is, a process of acquiring the user behavior data acquired in the user terminal of the behavior data providing user and transmitting the user behavior data to the user terminal of the behavior data requesting user is executed.

The description of the sequence diagram illustrated in Fig. 16 will be continued.

### (Step S206)

Next, in step S206, the management server 50 storing the "behavior data transmission/reception terminal management data" having the data configuration described with reference to Fig. 17 in the storage unit transmits an answer from the terminal inquiring whether or not to permit the record request of the behavior data, that is, whether or not to provide the "behavior data" to the "behavior data request terminal".

### (Step S207)

In step S207, the user of the "behavior data request terminal" checks the answer from the other terminal received from the management server 50, that is, the availability information of the provision of the "behavior data".

According to such a processing sequence, "behavior data transmission/reception terminal management data" in which "behavior data request terminal" and "behavior data request terminal" are associated with each other is registered in the management server 50.

The management server 50 executes transmission and reception management of the behavior data of the user acquired by each user terminal on the basis of the "behavior data transmission/reception terminal management data".

That is, a process of acquiring the user behavior data acquired in the user terminal of the behavior data providing user and transmitting the user behavior data to the user terminal of the behavior data requesting user is executed.

As a result, the user terminal can execute, for example, the machine role determination processing and the execution action determination processing in consideration of not only the data stored in the own terminal but also the user behavior of another user received from another terminal.

### [5. Specific Example of Processing Using Information Processing Apparatus of Present Disclosure]

Next, a specific example of processing using the information processing apparatus of the present disclosure will be described.

The following plurality of processing examples will be sequentially described.
(Processing Example 1) Basic Processing Example of Determining Execution Action Between Two User Terminals Which Transmit and Receive Behavior Data To and From Each Other
(Processing Example 2) Processing Example of Determining Execution Action Between Two User Terminals Which Transmit and Receive Behavior Data To and From Each Other
(Processing Example 3) Processing Example a of Determining Execution Action Among Three User Terminals That Mutually Transmit and Receive Behavior Data
(Processing Example 4) Processing Example b of Determining Execution Action Among Three User Terminals That Mutually Transmit and Receive Behavior Data
(Processing Example 5) Processing Example a in Which Action to Be Determined Between Two User Terminals That Mutually Transmit and Receive Behavior Data Is Set as Optimal Advice to User
(Processing Example 6) Processing Example b in Which Action to Be Determined Between Two User Terminals That Mutually Transmit and Receive Behavior Data Is Set as Optimal Advice to User

### (5-1. (Processing Example 1) Basic Processing Example of Determining Execution Action Between Two User Terminals Which Transmit and Receive Behavior Data To and From Each Other)

First, as (Processing Example 1), a basic processing example of determining an execution action between two user terminals that mutually transmit and receive behavior data will be described.

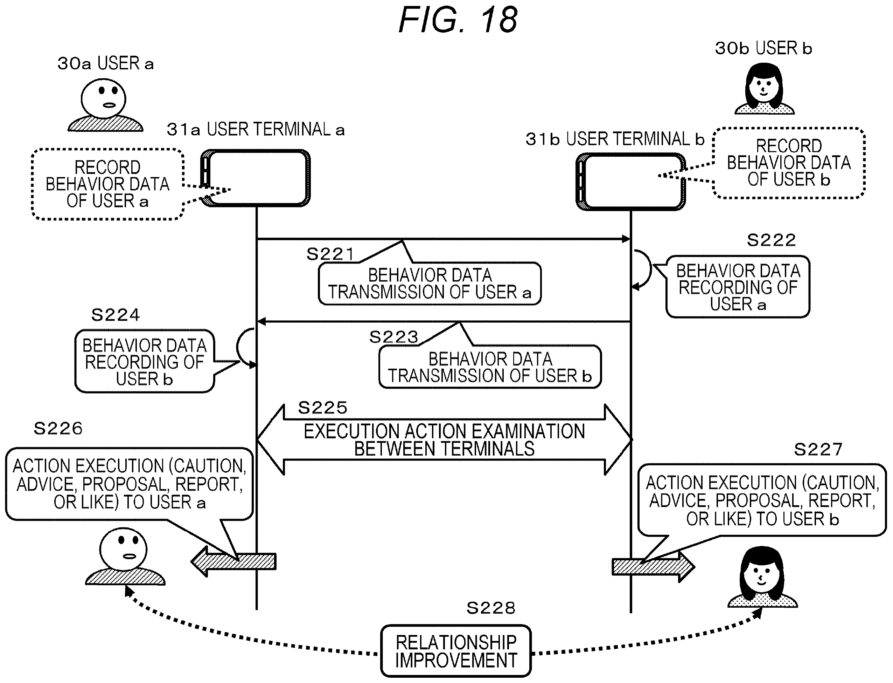

Fig. 18 is a sequence diagram illustrating (Processing Example 1), and is a sequence diagram for explaining processing executed between the user terminal a, 31a, used by the user a, 30a, and the user terminal b, 31b, used by the user b, 30b.

Note that the user a, 30a, and the user b, 30b, are permitted to mutually transmit and receive the respective pieces of behavior data between the user terminals a and b of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S221) illustrated in Fig. 18 will be sequentially described.

### (Step S221)

First, in step S221, the user terminal a, 31a, transmits the behavior data of the user a, 30a, to the user terminal b, 31b.

Note that the user terminal a, 31a, also records behavior data of the user a, 30a, in the user terminal a, 31a. The data is stored in the user behavior data storage unit 121 in the data storage unit 120 described above with reference to Fig. 7.

### (Step S222)

Next, in step S222, the user terminal b, 31b, stores the behavior data of the user a, 30a, received from the user terminal a, 31a, in the storage unit in the user terminal b, 31b. The data is stored in the user relationship data storage unit 123 in the data storage unit 120 described above with reference to Fig. 7.

### (Step S223)

Further, in step S223, the user terminal b, 31b, transmits the behavior data of the user b, 30b, to the user terminal a, 31a.

Note that the user terminal b, 31b, also records the behavior data of the user b, 30b, in the user terminal b, 31b. The data is stored in the user behavior data storage unit 121 in the data storage unit 120 described above with reference to Fig. 7.

### (Step S224)

Next, in step S224, the user terminal a, 31a, stores the behavior data of the user b, 30b, received from the user terminal b, 31b, in the storage unit in the user terminal a, 31a. The data is stored in the user relationship data storage unit 123 in the data storage unit 120 described above with reference to Fig. 7.

### (Step S225)

Next, in step S225, the user terminal a, 31a, and the user terminal b, 31b, communicate with each other, and determine actions to be executed for the users a and b on the basis of the behavior data of the users a and b stored in the terminals.

For example, various execution actions such as warning, advice, suggestion, and report to the user are determined.

This processing corresponds to the processing described above with reference to Figs. 12 and 13. An optimal action is determined between two terminals a and b by using data stored in each terminal.

### (Step S226)

Next, in step S226, the user terminal a, 31a, executes the execution action determined in step S225.

For example, actions such as warning, advice, suggestion, and report are performed on the user a, 30a.

### (Step S227)

Next, in step S227, the user terminal b, 31b, executes the execution action determined in step S225.

For example, actions such as caution, advice, suggestion, and report are performed on the user b, 30b.

By performing these processes, mutual understanding between the user a, 30a, and the user b, 30b, is deepened, and a good relationship is constructed.

### (5-2. (Processing Example 2) Processing Example of Determining Execution Action Between Two User Terminals Which Transmit and Receive Behavior Data To and From Each Other)

Next, as (Processing Example 2), a processing example of determining an execution action between two user terminals that mutually transmit and receive behavior data will be described.

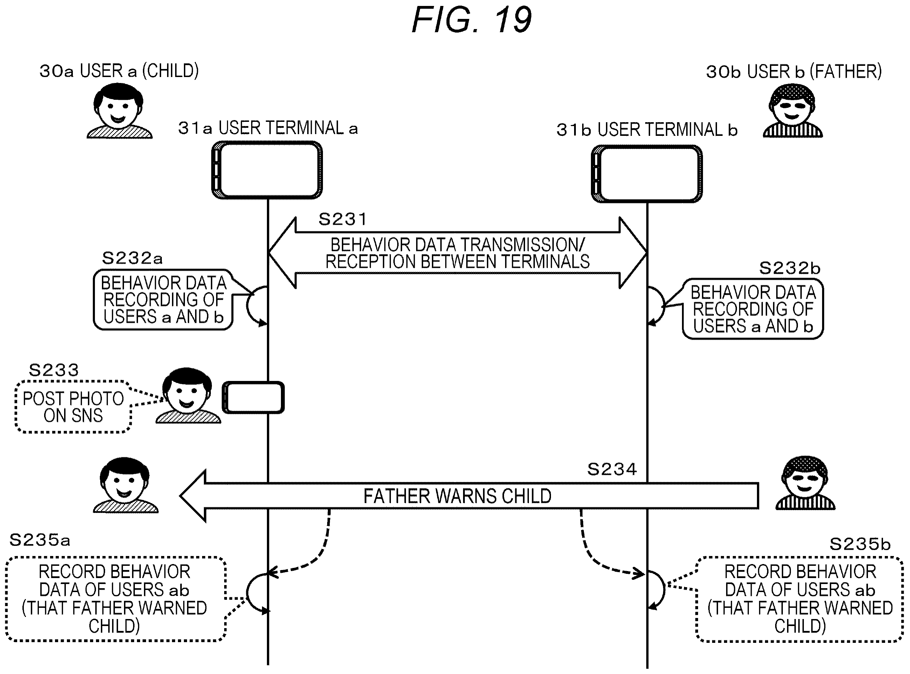

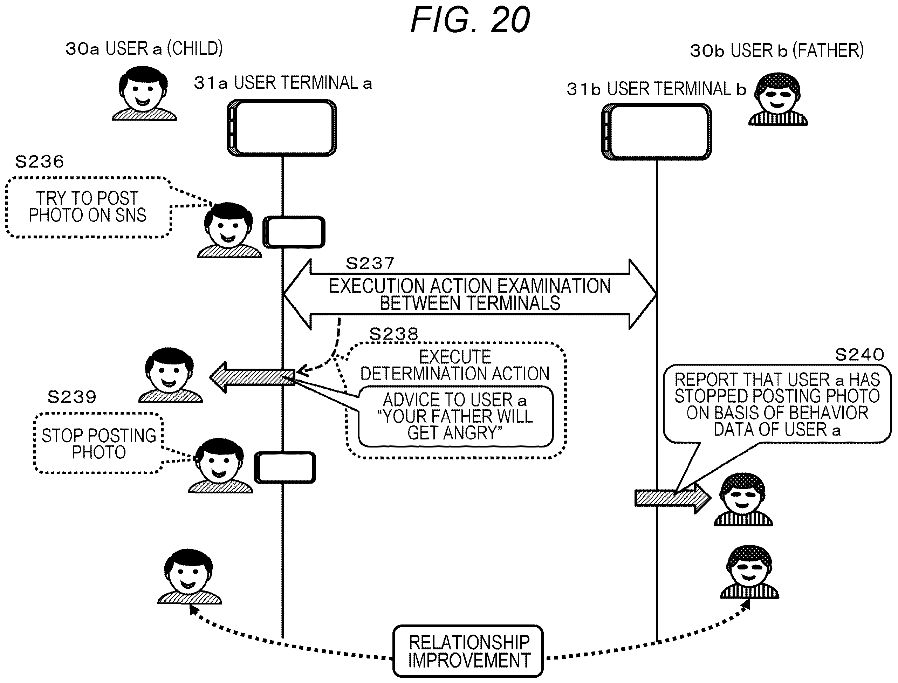

Figs. 19 and 20 are sequence diagrams illustrating this (Processing Example 2), and are sequence diagrams for explaining processing executed between the user terminal a, 31a, used by the user a (child), 30a, and the user terminal b, 31b, used by the user b (father), 30b.

Note that the user a (child), 30a, and the user b (father), 30b, are permitted to mutually transmit and receive the respective pieces of behavior data between the user terminals a and b of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S231) illustrated in Figs. 19 and 20 will be sequentially described.

### (Steps S231 to S232)

Steps S231 to S232 are processing in which the user terminal a, 31a, and the user terminal b, 31b, mutually transmit and receive the user behavior data and record the user behavior data in the terminals.

This process corresponds to the processes of steps S221 to S114 of the sequence diagram described above with reference to Fig. 18, and these processes are illustrated in a simplified manner.

The behavior data of the users a and b are recorded in the user terminal a, 31a, and the user terminal b, 31b, respectively.

### (Step S233)

Next, in step S233, the user a (child), 30a, operates the user terminal a, 31a, to post photos on the SNS.

### (Step S234)

Next, in step S234, the user b (father), 30b, warns the user a (child), 30a.

This warning processing is processing that the user b (father), 30b, and the user a (child), 30a, actually face each other in the same space and is executed verbally.

### (Steps S235a and S235b)

Next, in steps S235a and S235b, the user terminal a, 31a, and the user terminal b, 31b, record the actions of the user a (child), 30a, and the user b (father), 30b, performed in step S234, that is, behavior data indicating that the user b (father), 30b, have warned the user a (child), 30a, in each terminal.

### (Step S236)

Next, in step S236, the user a (child), 30a, operates the user terminal a, 31a, to post photos on the SNS.

### (Step S237)

Next, in step S237, the user terminal a, 31a, and the user terminal b, 31b, communicate with each other, and determine an action to be executed for the user on the basis of the behavior data of the users a and b stored in each terminal.

This processing corresponds to the processing described above with reference to Figs. 12 and 13. An optimal action is determined between two terminals a and b by using data stored in each terminal.

### (Step S238)

Next, in step S238, the user terminal a, 31a, executes the execution action determined in step S237.

For example, as an action to stop the user a (child), 30a, from posting a photo, a warning such as
"Your father will get angry"
is executed.

### (Step S239)

Next, in step S239, the user a (child), 30a, cancels the photo posting according to the warning from the user terminal a, 31a.

### (Step S240)

Next, in step S240, the user terminal b, 31b, receives the behavior data of the user a (child), 30a, indicating that the user a (child), 30a, has stopped posting the photo, and reports that the user a (child), 30a, has stopped posting the photo to the user b (father), 31b, on the basis of the behavior data.

By performing these processes, mutual understanding between the user a (child), 30a, and the user b (father), 30b, is deepened, and a good relationship is constructed.

### (5-3. (Processing Example 3) Processing Example a of Determining Execution Action Among Three User Terminals That Mutually Transmit and Receive Behavior Data)

Next, as (Processing Example 3), Processing Example a of determining an execution action among three user terminals that mutually transmit and receive behavior data will be described.

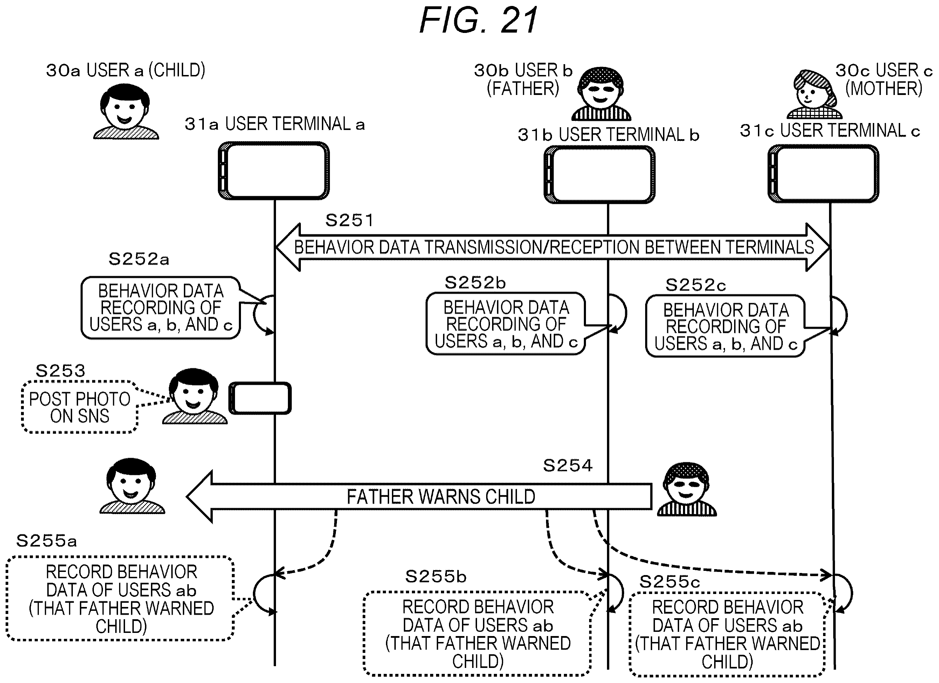

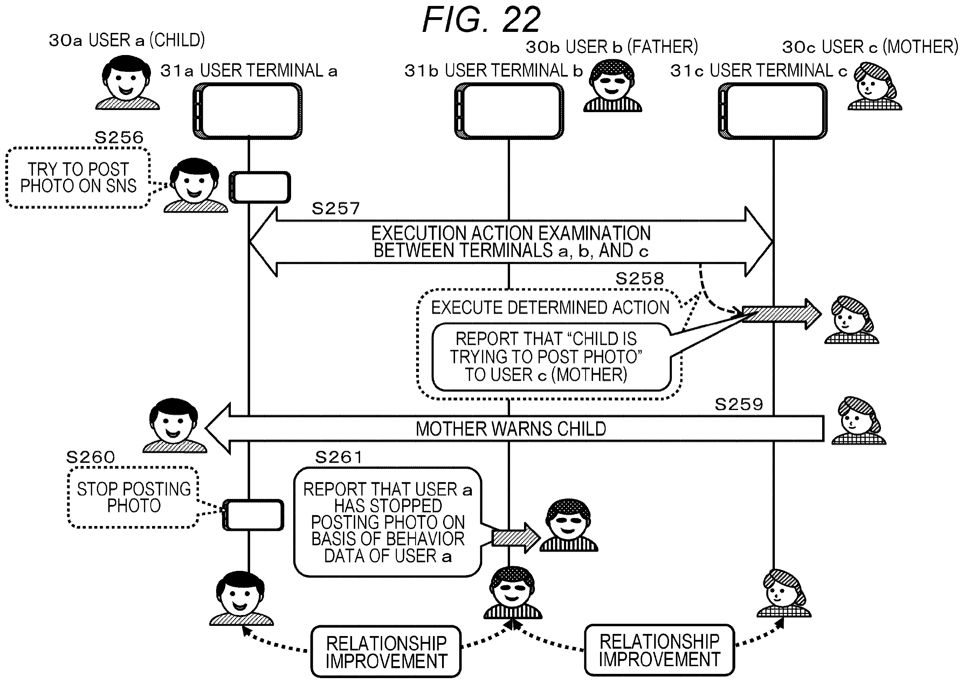

Figs. 21 to 22 are sequence diagrams illustrating (Processing Example 3), and are sequence diagrams for explaining processing executed among the user terminal a, 31a, used by the user a (child), 30a, the user terminal b, 31b, used by the user b (father), 30b, and the user terminal c, 31c, used by the user c (mother), 30c.

Note that the user a (child), 30a, the user b (father), 30b, and the user c (mother), 30c, are permitted to mutually transmit and receive the respective pieces of behavior data among the user terminals a, b, and c of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S251) illustrated in Figs. 21 to 22 will be sequentially described.

### (Steps S251 to S252)

Steps S251 to S252 are processing in which the user terminal a, 31a, the user terminal b, 31b, and the user terminal c, 31c, mutually transmit and receive the user behavior data and record the user behavior data in the terminals.

The behavior data of the users a, b, and c are recorded in the user terminal a, 31a, the user terminal b, 31b, and the user terminal c, 31c, respectively.

### (Step S253)

Next, in step S253, the user a (child), 30a, operates the user terminal a, 31a, to post photos on the SNS.

### (Step S254)

Next, in step S254, the user b (father), 30b, warns the user a (child), 30a.

This warning processing is processing that the user b (father), 30b, and the user a (child), 30a, actually face each other in the same space and is executed verbally.

### (Steps S255a, S255b, and S255c)

Next, in steps S235a, S235b, and S255c, the user terminal a, 31a, the user terminal b, 31b, and the user terminal c, 31c, record the actions of the user a (child), 30a, and the user b (father), 30b, performed in step S254, that is, behavior data indicating that the user b (father), 30b, have warned the user a (child), 30a, in each terminal.

### (Step S256)

Next, in step S256, the user a (child), 30a, operates the user terminal a, 31a, to post photos on the SNS.

### (Step S257)

Next, in step S257, the user terminal a, 31a, the user terminal b, 31b, and the user terminal c, 31c, communicate with each other, and determine an action to be executed for the user on the basis of the behavior data of the users a, b, and c stored in each terminal.

This processing corresponds to the processing described above with reference to Figs. 12 and 13. An optimal action is determined among the three terminals a, b, and c by using data stored in each terminal.

In this action determination processing, the execution action determination unit of each terminal confirms that the user b (father), 30b, is at work in the company and cannot directly warn the user a (child), 30a, and that the user c (mother), 30c, is near the user a (child), 30a, on the basis of the behavior data of the users a and bc.

On the basis of these checks, an action to be executed is determined.

Specifically, an action of reporting that the user a (child), 30a, intends to post a photo to the user c (mother), 30c, is determined as the execution action.

### (Step S258)

Next, in step S258, the user terminal c, 31c, executes the execution action determined in step S257.

That is, a report such as
"The child is trying to post a photo"
is executed to the user c (mother), 30c.

### (Step S259)

Next, in step S259, the user c (mother), 30c, warns directly and verbally the user a (child), 30a.

### (Step S260)

Next, in step S260, the user a (child), 30a, stops posting photos according to the warning from the user c (mother), 30c.

### (Step S261)

Next, in step S261, the user terminal b, 31b, receives the behavior data of the user a (child), 30a, indicating that the user a (child), 30a, has stopped posting the photo, and reports that the user a (child), 30a, has stopped posting the photo to the user b (father), 31b, on the basis of the behavior data.

By performing these processes, mutual understanding between the user a (child), 30a, and the user b (father), 30b, and the user c (mother), 30c, is deepened, and a good relationship is constructed.

### (5-4. (Processing Example 4) Processing Example b of Determining Execution Action Among Three User Terminals That Mutually Transmit and Receive Behavior Data)

Next, as (Processing Example 4), Processing Example b for determining an execution action among three user terminals that mutually transmit and receive behavior data will be described.

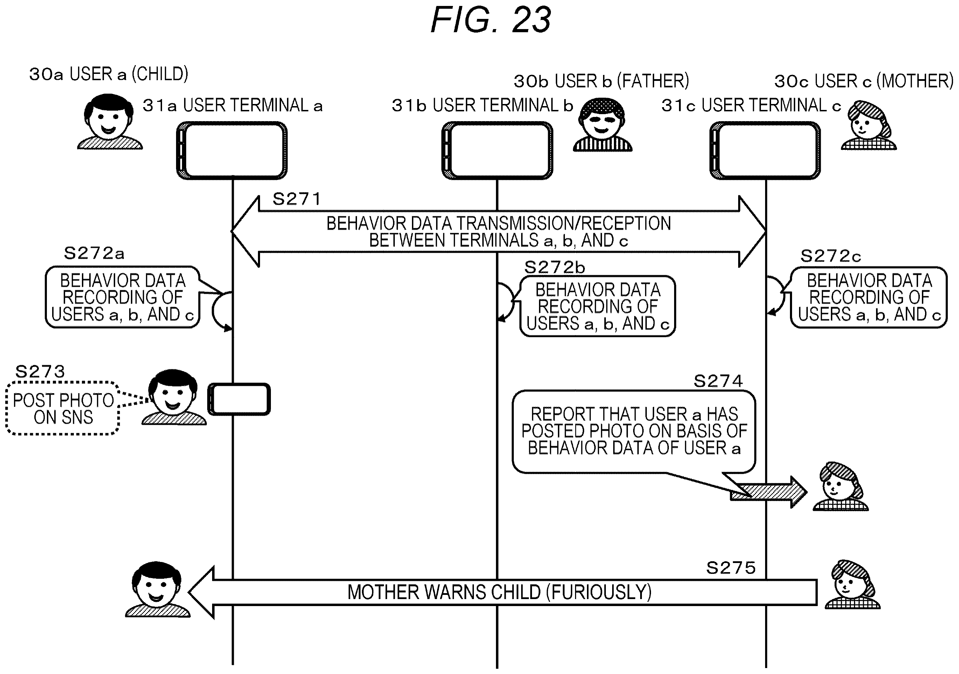

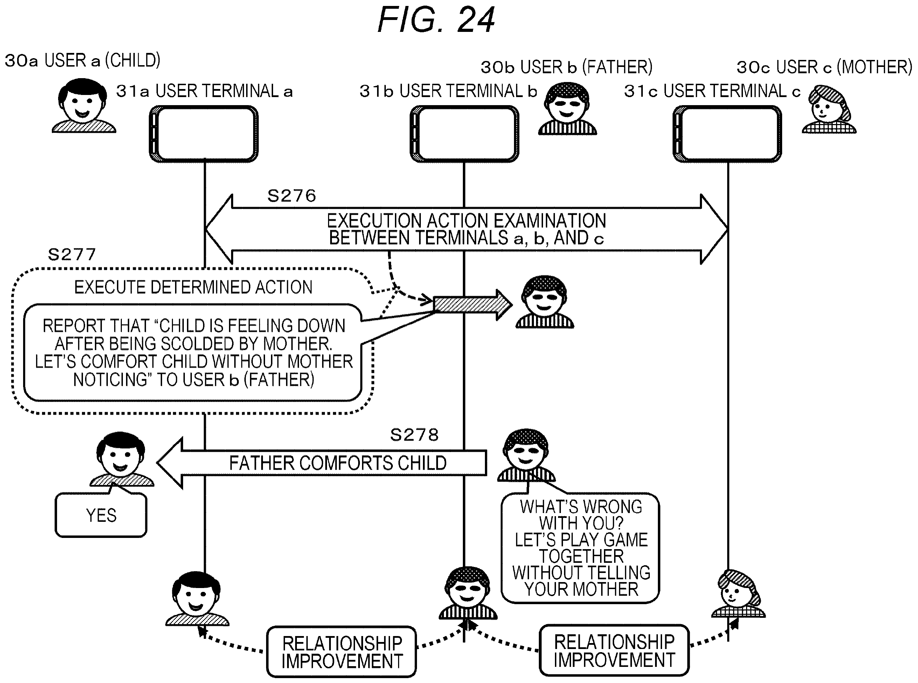

Figs. 23 to 24 are sequence diagrams illustrating (Processing Example 4), and are sequence diagrams for explaining processing executed among the user terminal a, 31a, used by the user a (child), 30a, the user terminal b, 31b, used by the user b (father), 30b, and the user terminal c, 31c, used by the user c (mother), 30c.

Note that the user a (child), 30a, the user b (father), 30b, and the user c (mother), 30c, are permitted to mutually transmit and receive the respective pieces of behavior data among the user terminals a, b, and c of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S271) illustrated in Figs. 23 to 24 will be sequentially described.

### (Steps S271 to S272)

Steps S271 to S272 are processing in which the user terminal a, 31a, the user terminal b, 31b, and the user terminal c, 31c, mutually transmit and receive the user behavior data and record the user behavior data in the terminals.

The behavior data of the users a, b, and c are recorded in the user terminal a, 31a, the user terminal b, 31b, and the user terminal c, 31c, respectively.

### (Step S273)

Next, in step S253, the user a (child), 30a, operates the user terminal a, 31a, to post photos on the SNS.

### (Step S274)

Next, in step S274, the user terminal c, 31c, of the user c (mother), 30c, reports that the user a (child), 30a, has posted a photo to the user c (mother), 30c.

### (Step S275)

Next, in step S275, the user c (mother), 30c, warns the user a (child), 30a, in a furious manner.

This warning processing is processing that the user c (mother), 30c, and the user a (child), 30a, actually face each other in the same space and is executed verbally.

This action, that is, behavior data in which the user c (mother), 30c, warns the user a (child), 30a, in a furious manner is stored in the user terminals a, b, and c.

### (Step S276)

Next, in step S276, the user terminal a, 31a, the user terminal b, 31b, and the user terminal c, 31c, communicate with each other, and determine an action to be executed for the user on the basis of the behavior data of the users a, b, and c stored in each terminal.

The execution action determination unit of each terminal determines an optimal execution action in consideration of a behavior that the user c (mother), 30c, warns the user a (child), 30a in a furious manner.

Specifically, as an execution action, an action is determined to report to the user a (father), 30b, that the user a (child), 30a, is feeling down after being warned by the user c (mother), 30c, about posting a photo.

### (Step S277)

Next, in step S277, the user terminal b, 31b, executes the execution action determined in step S277.

That is, advice such as
"The child is feeling down after being scolded by the mother. Let's comfort the child without the mother noticing,"
is executed to the user b (father), 30b.

### (Step S278)

Next, in step S278, the user b (father), 30b, directly and verbally comforts the user a (child), 30a.

For example, the following words are uttered to the user a (child), 30a: "What's wrong with you? Let's play a game together without telling your mother".

By performing these processes, mutual understanding between the user a (child), 30a, and the user b (father), 30b, and the user c (mother), 30c, is deepened, and a good relationship is constructed.

### (5-5. (Processing Example 5) Processing Example a in Which Action to Be Determined Between Two User Terminals That Mutually Transmit and Receive Behavior Data Is Set as Optimal Advice to User)

Next, as (Processing Example 5), Processing Example a in which an action to be determined between two user terminals that mutually transmit and receive behavior data is set as optimal advice to the user will be described.

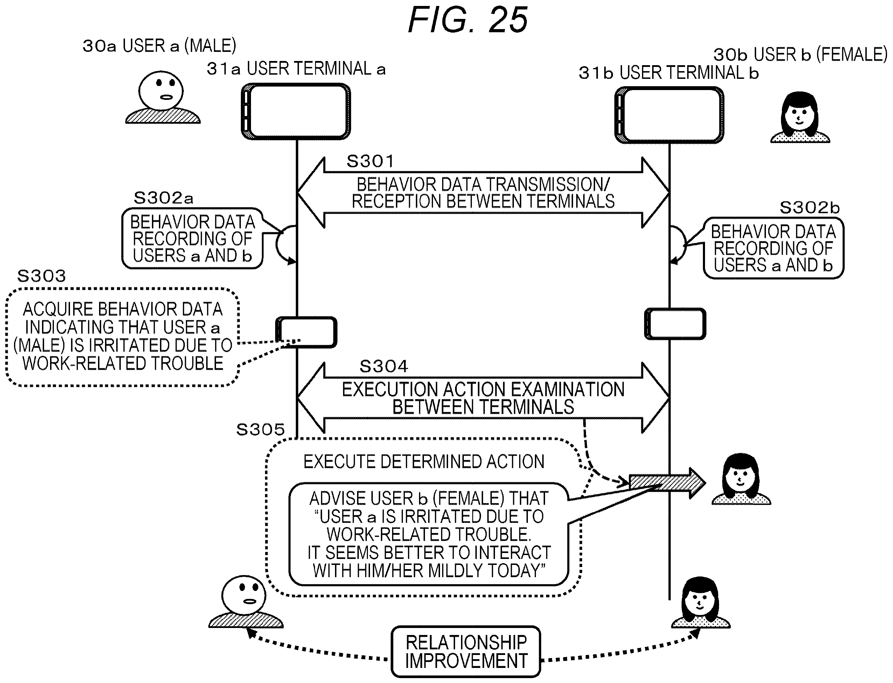

Fig. 25 is a sequence diagram illustrating this (Processing Example 5), and is a sequence diagram for explaining a process executed between the user terminal a, 31a, used by the user a (male), 30a, and the user terminal b, 31b, used by the user b (female), 30b.

Note that the user a (male), 30a, and the user b (female), 30b, permit mutual transmission and reception of respective pieces of behavior data between the user terminals a and b of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S301) illustrated in Fig. 25 will be sequentially described.

### (Steps S301 to S302)

Steps S301 to S302 are processing in which the user terminal a, 31a, and the user terminal b, 31b, mutually transmit and receive the user behavior data and record the user behavior data in the terminals.

The behavior data of the users a and b are recorded in the user terminal a, 31a, and the user terminal b, 31b, respectively.

### (Step S303)

Next, in step S303, the user terminal a, 31a, acquires behavior data indicating that the user a (male), 30a, is irritated due to work-related trouble.

### (Step S304)

Next, in step S304, the user terminal a, 31a, and the user terminal b, 31b, communicate with each other, and determine an action to be executed for the user on the basis of the behavior data of the users a and b stored in each terminal.

This processing corresponds to the processing described above with reference to Figs. 12 and 13. An optimal action is determined between two terminals a and b by using data stored in each terminal.

Here, an action of advising the user b (female), 30b, on how to contact the user a (male), 30a, is determined as the execution action.

### (Step S305)

Next, in step S305, the user terminal b, 31b, executes the execution action determined in step S304.

Specifically, advice such as
"The user a is irritated due to work-related trouble. It seems better to interact with him/her mildly today"
is executed to the user b (female), 30b.

By performing these processes, mutual understanding between the user a (male), 30a, and the user b (female), 30b, is deepened, and a good relationship is constructed.

### (5-6. (Processing Example 6) Processing Example b in Which Action to Be Determined Between Two User Terminals That Mutually Transmit and Receive Behavior Data Is Set as Optimal Advice to User)

Next, as (Processing Example 6), Processing Example b in which an action to be determined between two user terminals that mutually transmit and receive behavior data is set as optimal advice to the user will be described.

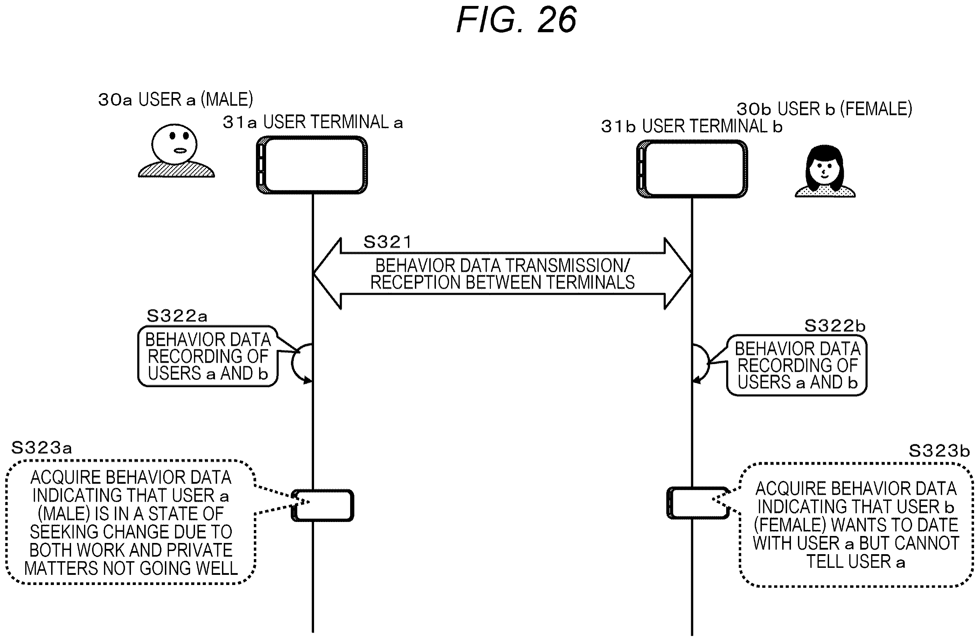

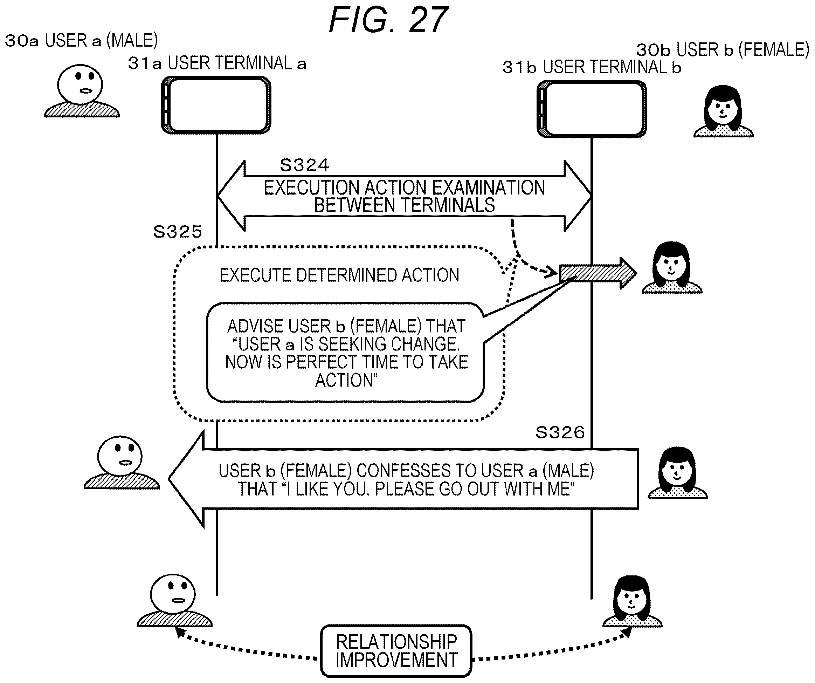

Figs. 26 to 27 are sequence diagrams illustrating this (Processing Example 6), and are sequence diagrams for explaining processing executed between the user terminal a, 31a, used by the user a (male), 30a, and the user terminal b, 31b, used by the user b (female), 30b.

Note that the user a (male), 30a, and the user b (female), 30b, permit mutual transmission and reception of respective pieces of behavior data between the user terminals a and b of the respective users.

That is, it is assumed that the terminal is already registered as the transmission/reception permitted terminal in the "behavior data transmission/reception terminal management data" held by the management server 50 described above with reference to Fig. 17.

Hereinafter, the processing steps (from step S301) illustrated in Fig. 25 will be sequentially described.

### (Steps S321 to S322)

Steps S321 to S322 are processing in which the user terminal a, 31a, and the user terminal b, 31b, mutually transmit and receive the user behavior data and record the user behavior data in the terminals.

The behavior data of the users a and b are recorded in the user terminal a, 31a, and the user terminal b, 31b, respectively.

### (Steps S323a and S323b)

Next, in step S323, the user terminal a, 31a,
acquires behavior data indicating that the user a (male) is in a state of seeking change due to both work and private matters not going well.

On the other hand, the user terminal b, 31b, acquires behavior data indicating that the user b (female) wants to date with the user a but cannot tell the user a.

### (Step S324)

Next, in step S324, the user terminal a, 31a, and the user terminal b, 31b, communicate with each other, and determine an action to be executed for the user on the basis of the behavior data of the users a and b stored in each terminal.

This processing corresponds to the processing described above with reference to Figs. 12 and 13. An optimal action is determined between two terminals a and b by using data stored in each terminal.

Here, an action of advising the user b (female), 30b, that the user a (male), 30a, should act is determined as the execution action.

### (Step S325)

Next, in step S325, the user terminal b, 31b, executes the execution action determined in step S324.

Specifically, advice such as
"The user a is seeking change. Now is the perfect time to take action"
is executed to the user b (female), 30b.

### (Step S326)

Next, in step S326, the user b (female), 30b, confess to the user a (male), 30a, according to the advice from the user terminal b, 31b.

By performing these processes, mutual understanding between the user a (male), 30a, and the user b (female), 30b, is deepened, and a good relationship is constructed.

As described above, the information processing apparatus (user terminal) of the present disclosure executes the determination processing of the role (machine role) to be executed by the apparatus and the determination processing of the execution action in consideration of data stored in the own terminal and data stored from another terminal.

By performing these processes, the relationship between the plurality of users can be favorably maintained.

### [6. Hardware Configuration Example of User Terminal and Server]

Next, for example, a hardware configuration example of the user terminal 100 such as a smartphone and the management server 50 having the configuration described with reference to Fig. 7 will be described.

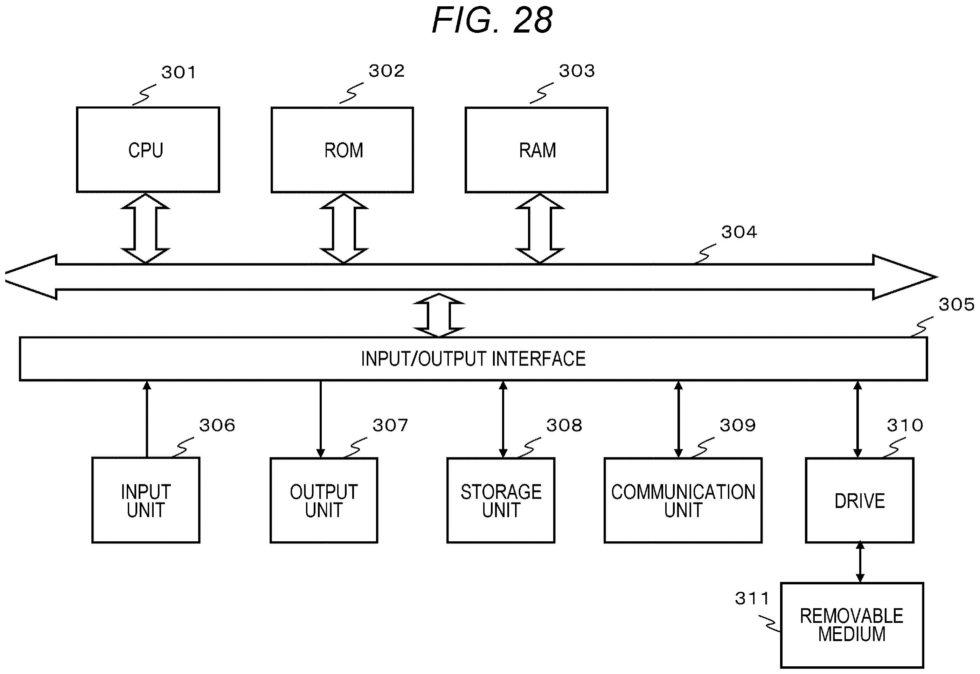

Fig. 28 is a diagram illustrating an example of a hardware configuration of the user terminal 100 which is the information processing apparatus of the present disclosure and the management server 50.

Hereinafter, the hardware configuration illustrated in Fig. 28 will be described.

A central processing unit (CPU) 301 functions as a control unit or a data processing unit that executes various processes according to a program stored in a read only memory (ROM) 302 or a storage unit 308. For example, processing according to the sequence described in the above-described examples is executed. A random access memory (RAM) 303 stores programs executed by the CPU 301, data, and the like. The CPU 301, the ROM 302, and the RAM 303 are mutually connected by a bus 304.

The CPU 301 is connected to an input/output interface 305 via the bus 304, and an input unit 306 including various switches, a keyboard, a mouse, a microphone, a sensor, and the like, and an output unit 307 including a display, a speaker, and the like are connected to the input/output interface 305. The CPU 301 executes various processes in response to commands input from the input unit 306, and outputs processing results to the output unit 307, for example.

The storage unit 308 connected to the input/output interface 305 includes, for example, a hard disk and the like, and stores programs executed by the CPU 301 and various data. The communication unit 309 functions as a transmission/reception unit for Wi-Fi communication, Bluetooth (registered trademark) (BT) communication, and other data communication via a network such as the Internet or a local area network, and communicates with an external apparatus.

A drive 310 connected to the input/output interface 305 drives a removable medium 311 such as a magnetic disk, an optical disk, a magneto-optical disk, or a semiconductor memory such as a memory card, and records or reads data.

### [7. Summary of Configuration of Present Disclosure]

Hereinabove, the examples of the present disclosure have been described in detail with reference to specific examples. However, it is obvious that those skilled in the art can make modifications and substitutions of the examples without departing from the gist of the present disclosure. That is, the present invention has been disclosed in the form of exemplification, and should not be interpreted in a limited manner. In order to determine the gist of the present disclosure, the claims should be taken into consideration.

Note that the technology disclosed in the present specification can have the following configurations.
(1) An information processing apparatus including:
   a user behavior data acquisition unit that acquires behavior data of a user who uses the information processing apparatus;
   an execution action determination unit that determines an action to be executed for the user; and
   an action execution unit that executes an action determined by the execution action determination unit,
   in which the execution action determination unit
   determines an execution action on the basis of user behavior data of the user acquired by the user behavior data acquisition unit and the behavior data of an external terminal-using user acquired from an external terminal.
(2) The information processing apparatus according to (1), in which the user behavior data acquisition unit
   inputs at least one of an image or a voice acquired by a sensor of the information processing apparatus or user operation information for the information processing apparatus, and analyze an action of the user to acquire user behavior data.
(3) The information processing apparatus according to (1) or (2), the information processing apparatus further including
   a user relationship data acquisition unit that acquires user relationship data indicating a relationship between the user and the external terminal-using user by using acquisition information from the external terminal,
   in which the execution action determination unit
   determines an execution action using the user relationship data acquired by the user relationship data acquisition unit.
(4) The information processing apparatus according to (3), in which the user relationship data acquisition unit
   analyzes an image or voice acquired by a sensor of the information processing apparatus, or user operation information for the information processing apparatus, and acquisition information from the external terminal, and generates user relationship data indicating a relationship between the user and the external terminal-using user.
(5) The information processing apparatus according to (3) or (4), in which the user relationship data acquisition unit
   acquires behavior data of the external terminal-using user stored in the external terminal, and
   the execution action determination unit
   determines an execution action using behavior data of the external terminal-using user acquired by the user relationship data acquisition unit.
(6) The information processing apparatus according to any one of (3) to (5), in which the user relationship data acquisition unit
   acquires the behavior data of the external terminal-using user stored in the external terminal permitted to acquire the user behavior data.
(7) The information processing apparatus according to any one of (3) to (6), in which acquisition permission information of the user behavior data from the external terminal is registered in a management server, and
   acquisition processing of the user behavior data from the external terminal by the information processing apparatus is executed under control of the management server.
(8) The information processing apparatus according to any one of (1) to (7), in which the execution action determination unit
   determines an execution action using external information acquired by the sensor of the information processing apparatus.
(9) The information processing apparatus according to (8), in which the sensor includes at least one of a camera, a microphone, or a position sensor.
(10) The information processing apparatus according to any one of (1) to (9), in which the execution action determination unit
   determines at least one of actions of warning, giving advice, suggesting, or reporting to the user as an action to be executed for the user.
(11) The information processing apparatus according to any one of (1) to (10), the information processing apparatus further including
   a user character analysis unit that analyzes a character of the user,
   in which the action execution unit
   executes an action controlled according to a user character analyzed by the user character analysis unit.
(12) The information processing apparatus according to any one of (1) to (11), the information processing apparatus further including
   a user character analysis unit that analyzes a character of the user;
   a machine character determination unit that determines a character of a machine as an action execution entity according to the user character analyzed by the user character analysis unit; and
   an action execution mode determination unit that determines an execution mode of an action according to a machine character determined by the machine character determination unit,
   in which the action execution unit
   executes the action determined by the execution action determination unit in an action execution mode determined by the action execution mode determination unit.
(13) The information processing apparatus according to (12), in which the machine character determination unit
   determines the machine character with reference to a database in which compatible machine characters are associated correspondingly for a respective plurality of different user characters.
(14) The information processing apparatus according to any one of (1) to (13), the information processing apparatus further including
   a machine role determination unit that determines a role of the machine that is an action execution entity,
   in which the machine role determination unit
   executes processing of determining a role of the machine on the basis of user behavior data of the user acquired by the user behavior data acquisition unit and behavior data of an external equipment-using user acquired from external equipment.
(15) The information processing apparatus according to (14), in which the machine role determination unit
   determines a machine role of at least one of advising the user, comforting the user, reporting to the user, or listening to a user's concern.
(16) The information processing apparatus according to any one of (1) to (14), in which the action execution unit
   executes at least one action of voice output from a speaker, text or image output to a display unit, or control of external equipment.
(17) An information processing system including a plurality of communication terminals that performs communication via a network,
   each of the plurality of communication terminals being configured to:
   analyze behavior data of a plurality of users using the plurality of communication terminals; and
   determine and execute an action to be executed for each user who uses the plurality of communication terminals.
(18) An information processing method executed in an information processing apparatus, the information processing method including:
   a user behavior data acquisition step of acquiring, by a user behavior data acquisition unit, behavior data of a user who uses the information processing apparatus;
   an execution action determination step of determining, by an execution action determination unit, an action to be executed for the user; and
   an action execution step in which an action execution unit executes an action determined by the execution action determination unit,
   in which the execution action determination step
   determines an executed action on the basis of user behavior data of the user acquired by the user behavior data acquisition unit and behavior data of an external terminal-using user acquired from an external terminal.

Furthermore, the series of processing described in the specification can be executed by hardware, software, or a combined configuration of both. In the case of executing processing by software, a program recording a processing sequence can be installed and executed in a memory in a computer incorporated in dedicated hardware, or the program can be installed and executed in a general-purpose computer capable of executing various types of processing. For example, the program can be recorded in advance in a recording medium. In addition to installation from the recording medium to the computer, the program can be received via a network such as a local area network (LAN) or the Internet and installed in a recording medium such as a built-in hard disk.

Note that the various types of processing described in the specification may be executed not only in time series according to the description but also in parallel or individually according to the processing capability of the apparatus that executes the processing or as necessary. Furthermore, in the present specification, a system is a logical set configuration of a plurality of apparatuses, and is not limited to a system in which apparatuses of respective configurations are in the same housing.

### INDUSTRIAL APPLICABILITY

As described above, according to the configuration of an example of the present disclosure, an apparatus and a method for determining and executing an action such as optimal advice for each user in comprehensive consideration of behavior data of users of each of a plurality of user terminals are realized.

Specifically, for example, a user behavior data acquisition unit that acquires behavior data of a user who uses a user terminal such as a smartphone, an execution action determination unit that determines an action to be executed for the user, and an action execution unit that executes the action determined by the execution action determination unit are included. The execution action determination unit determines and executes an optimal action to be executed on the basis of the user behavior data of the user acquired by the user behavior data acquisition unit and the behavior data of the external terminal-using user acquired from the external terminal.

According to the present configuration, an apparatus and a method for determining and executing an action such as optimal advice for each user in comprehensive consideration of behavior data of users of each of a plurality of user terminals are realized.

### REFERENCE SIGNS LIST

- 10: Child
- 12: Child terminal
- 20: Father
- 22: Father terminal
- 100: User terminal
- 101: Communication unit
- 102: Sensor group
- 110: Data acquisition unit
- 111: External data acquisition unit
- 112: User behavior data acquisition unit
- 113: User relationship data acquisition unit
- 120: Data storage unit
- 121: External data storage unit
- 122: User behavior data storage unit
- 123: User relationship data storage unit
- 130: Data analysis unit
- 131: User character analysis unit
- 132: Machine character analysis unit
- 133: Machine role determination unit
- 140: Action control unit
- 141: Execution action determination unit
- 142: Action execution mode (taste) determination unit
- 150: Action execution unit
- 160: User reaction analysis unit
- 170: User/machine character matching database
- 301: CPU
- 302: ROM
- 303: RAM
- 304: Bus
- 305: Input/output interface
- 306: Input unit
- 307: Output unit
- 308: Storage unit
- 309: Communication unit
- 310: Drive
- 311: Removable medium

## Claims

1. An information processing apparatus comprising:
a user behavior data acquisition unit that acquires behavior data of a user who uses the information processing apparatus;
an execution action determination unit that determines an action to be executed for the user; and
an action execution unit that executes an action determined by the execution action determination unit,
wherein the execution action determination unit
determines an execution action on a basis of user behavior data of the user acquired by the user behavior data acquisition unit and the behavior data of an external terminal-using user acquired from an external terminal.

2. The information processing apparatus according to claim 1, wherein the user behavior data acquisition unit
inputs at least one of an image or a voice acquired by a sensor of the information processing apparatus or user operation information for the information processing apparatus, and analyze an action of the user to acquire user behavior data.

3. The information processing apparatus according to claim 1, the information processing apparatus further comprising
a user relationship data acquisition unit that acquires user relationship data indicating a relationship between the user and the external terminal-using user by using acquisition information from the external terminal,
wherein the execution action determination unit
determines an execution action using the user relationship data acquired by the user relationship data acquisition unit.

4. The information processing apparatus according to claim 3, wherein the user relationship data acquisition unit
analyzes an image or voice acquired by a sensor of the information processing apparatus, or user operation information for the information processing apparatus, and acquisition information from the external terminal, and generates user relationship data indicating a relationship between the user and the external terminal-using user.

5. The information processing apparatus according to claim 3, wherein the user relationship data acquisition unit
acquires behavior data of the external terminal-using user stored in the external terminal, and
the execution action determination unit
determines an execution action using behavior data of the external terminal-using user acquired by the user relationship data acquisition unit.

6. The information processing apparatus according to claim 3, wherein the user relationship data acquisition unit
acquires the behavior data of the external terminal-using user stored in the external terminal permitted to acquire the user behavior data.

7. The information processing apparatus according to claim 3, wherein acquisition permission information of the user behavior data from the external terminal is registered in a management server, and
acquisition processing of the user behavior data from the external terminal by the information processing apparatus is executed under control of the management server.

8. The information processing apparatus according to claim 1, wherein the execution action determination unit
determines an execution action using external information acquired by the sensor of the information processing apparatus.

9. The information processing apparatus according to claim 8, wherein the sensor includes at least one of a camera, a microphone, or a position sensor.

10. The information processing apparatus according to claim 1, wherein the execution action determination unit
determines at least one of actions of warning, giving advice, suggesting, or reporting to the user as an action to be executed for the user.

11. The information processing apparatus according to claim 1, the information processing apparatus further comprising
a user character analysis unit that analyzes a character of the user,
wherein the action execution unit
executes an action controlled according to a user character analyzed by the user character analysis unit.

12. The information processing apparatus according to claim 1, the information processing apparatus further comprising
a user character analysis unit that analyzes a character of the user;
a machine character determination unit that determines a character of a machine as an action execution entity according to the user character analyzed by the user character analysis unit; and
an action execution mode determination unit that determines an execution mode of an action according to a machine character determined by the machine character determination unit,
wherein the action execution unit
executes the action determined by the execution action determination unit in an action execution mode determined by the action execution mode determination unit.

13. The information processing apparatus according to claim 12, wherein the machine character determination unit
determines the machine character with reference to a database in which compatible machine characters are associated correspondingly for a respective plurality of different user characters.

14. The information processing apparatus according to claim 1, the information processing apparatus further comprising
a machine role determination unit that determines a role of the machine that is an action execution entity,
wherein the machine role determination unit
executes processing of determining a role of the machine on a basis of user behavior data of the user acquired by the user behavior data acquisition unit and behavior data of an external equipment-using user acquired from external equipment.

15. The information processing apparatus according to claim 14, wherein the machine role determination unit
determines a machine role of at least one of advising the user, comforting the user, reporting to the user, or listening to a user's concern.

16. The information processing apparatus according to claim 1, wherein the action execution unit
executes at least one action of voice output from a speaker, text or image output to a display unit, or control of external equipment.

17. An information processing system including a plurality of communication terminals that performs communication via a network,
each of the plurality of communication terminals being configured to:
analyze behavior data of a plurality of users using the plurality of communication terminals; and
determine and execute an action to be executed for each user who uses the plurality of communication terminals.

18. An information processing method executed in an information processing apparatus, the information processing method comprising:
a user behavior data acquisition step of acquiring, by a user behavior data acquisition unit, behavior data of a user who uses the information processing apparatus;
an execution action determination step of determining, by an execution action determination unit, an action to be executed for the user; and
an action execution step in which an action execution unit executes an action determined by the execution action determination unit,
wherein the execution action determination step
determines an executed action on a basis of user behavior data of the user acquired by the user behavior data acquisition unit and behavior data of an external terminal-using user acquired from an external terminal.
